# EUROPEAN PATENT APPLICATION

(11) **EP 3 846 425 A1**
(43) Date of publication of application: **07.07.2021**
(21) Application number: 19853854.8
(22) Date of filing: 31.05.2019
(51) Int. Cl.: H04M 1/04, H04M 1/725, F16M 13/04

(54) **HANDHELD DEVICE, PHOTOGRAPHING APPARATUS AND CONTROL METHOD**

(30) Priority: 27.08.2018 WO PCT/CN2018/102454
(71) Applicant: SZ DJI Technology Co., Ltd., Shenzhen, Guangdong 518057 (CN)
(72) Inventor: GUO, Shengjia, Shenzhen, Guangdong 518057 (CN); MA, Tianhang, Shenzhen, Guangdong 518057 (CN)
(74) Representative: Goddar, Heinz J.
(86) International application number: PCT/CN2019/089709
(87) International publication number: WO 2020/042699

(57) **Abstract**

A handheld device (100), a photographing device (400), and a control method. The handheld device (100) includes a fixing bracket (50), a telescopic rod (40), a handheld member (10), and a power source. The fixing bracket (50) is mounted at the telescopic rod (40). The telescopic rod (40) is mounted at the handheld member (10). The power source is disposed at the handheld member (10). The fixing bracket (50) is configured to detachably connect a first mobile electronic device (200). After the fixing bracket (50) is connected with the first mobile electronic device (200), the handheld device (100) is configured to provide electrical energy to the first mobile electronic device (200) through the power source, and control the first mobile electronic device (200) to start up and/or shut down.

## Description

### CROSS-REFERENCE TO RELATED APPLICATION

This application claims priority to and the benefit of International Application No. PCT/CN2018/102454, filed August 27, 2018 with the International Bureau, the entire content of which is incorporated herein by reference.

### TECHNICAL FIELD

The present disclosure relates to the field of photographing device technology and, more particularly, to a handheld device, a photographing device, and a control method.

### BACKGROUND

Generally, a selfie stick can support mobile electronic devices such as mobile phones and tablet computers to photograph. When the selfie stick is in use, it is only necessary to fix a mobile electronic device on a support bracket and adjust a length of the selfie stick being held to meet needs of photographing requirements with different distances. However, the selfie stick has a single function and cannot meet the needs of users well.

### SUMMARY

To solve the above technical problems, the preset disclosure provides a handheld device, a photographing device, and a control method.

One aspect of the present disclosure provides a handheld device applied to a first mobile electronic device. The handheld device includes a fixing bracket, a telescopic rod, a handheld member, and a power source. The fixing bracket is mounted at the telescopic rod. The telescopic rod is mounted at the handheld member. The power source is disposed at the handheld member. The fixing bracket is configured to be detachably connected with the first mobile electronic device. After the fixing bracket is detachably connected with the first mobile electronic device, the handheld device is configured to provide electrical energy to the first mobile electronic device through the power source, and to control the first mobile electronic device to start up and/or shut down.

Another aspect of the present disclosure provides a photographing device including a handheld device and a first mobile electronic device. The handheld device includes a fixing bracket, a telescopic rod, a handheld member, and a power source. The fixing bracket is mounted at the telescopic rod. The telescopic rod is mounted at the handheld member. The power source is disposed at the handheld member. The fixing bracket is configured to be detachably connected with the first mobile electronic device. After the fixing bracket is detachably connected with the first mobile electronic device, the handheld device is configured to provide electrical energy to the first mobile electronic device through the power source, and to control the first mobile electronic device to start up and/or shut down.

Another aspect of the present disclosure provides a control method applied to a handheld device. The handheld device includes a fixing bracket, a telescopic rod, a handheld member, and a power source. The fixing bracket is mounted at the telescopic rod. The telescopic rod is mounted at the handheld member. The power source is disposed at the handheld member. The fixing bracket is provided with an electrical connection mechanism for electrically connecting the first mobile electronic device is capable of being detachably connected with the fixing bracket. The control method includes: receiving input operation from a user with respect to the handheld device; generating a startup instruction or a shutdown instruction according to the input operation; transmitting the startup instruction or the shutdown instruction to the first mobile electronic device; when the startup instruction is transmitted to the first mobile electronic device, turning on the power source to provide electricity to the first mobile electronic device and controlling the first mobile electronic device to start up by one button; and when the shutdown instruction is transmitted to the first mobile electronic device, controlling the first mobile electronic device to shut down by one button.

Another aspect of the present disclosure provides a handheld device. The handheld device includes a fixing bracket, a telescopic rod, a handheld member, and a power source. The fixing bracket is mounted at the telescopic rod. The telescopic rod is mounted at the handheld member. The power source is disposed at the handheld member. The fixing bracket is provided with an electrical connection mechanism for electrically connecting the first mobile electronic device is capable of being detachably connected with the fixing bracket. The handheld member is provided with a controller. The controller is configured to: receive input operation from a user with respect to the handheld device; generate a startup instruction or a shutdown instruction according to the input operation; transmit the startup instruction or the shutdown instruction to the first mobile electronic device; when the startup instruction is transmitted to the first mobile electronic device, turn on the power source to provide electricity to the first mobile electronic device and control the first mobile electronic device to start up by one button; and when the shutdown instruction is transmitted to the first mobile electronic device, control the first mobile electronic device to shut down by one button.

Another aspect of the present disclosure provides a photographing device including a handheld device and a first mobile electronic device. The handheld device includes a fixing bracket, a telescopic rod, a handheld member, and a power source. The fixing bracket is mounted at the telescopic rod. The telescopic rod is mounted at the handheld member. The power source is disposed at the handheld member. The fixing bracket is provided with an electrical connection mechanism for electrically connecting the first mobile electronic device is capable of being detachably connected with the fixing bracket. The handheld member is provided with a controller. The controller is configured to: receive input operation from a user with respect to the handheld device; generate a startup instruction or a shutdown instruction according to the input operation; transmit the startup instruction or the shutdown instruction to the first mobile electronic device; when the startup instruction is transmitted to the first mobile electronic device, turn on the power source to provide electricity to the first mobile electronic device and control the first mobile electronic device to start up by one button; and when the shutdown instruction is transmitted to the first mobile electronic device, control the first mobile electronic device to shut down by one button.

In the handheld device, the photographing device, and the control method provided by the present disclosure, after the first mobile electronic device is mounted at the fixing bracket, the handheld device is configured to provide electrical energy to the first mobile electronic device through the power source. It is unnecessary for the user to carry a power bank and the user's burden is alleviated. Further, the handheld device is configured to control the first mobile electronic device to start up and/or shut down. It is unnecessary for the user to remove the mobile electronic device to turn on and/or turn off the mobile electronic device. Convenience of the user's process, diversification of functions, and the user experience are improved.

The different aspects and advantages of this disclosure will be illustrated in the following description and will become obvious and easy to understand from the description of the embodiments in conjunction with the following drawings.

### BRIEF DESCRIPTION OF THE DRAWINGS

The above and/or additional aspects and advantages of this disclosure will become obvious and easy to understand from the description of the embodiments in conjunction with the following drawings.
FIG. 1 is a schematic perspective view of an exemplary photographing device consistent with various embodiments of the present disclosure.
FIG. 2 is a schematic perspective view of an exemplary handheld device of the photographing device in FIG. 1 consistent with various embodiments of the present disclosure.
FIGs. 3-6 are schematic perspective views of the handheld device in FIG. 2 in different statuses consistent with various embodiments of the present disclosure.
FIG. 7 is a partial enlarged view of VII part of the handheld device in FIG. 5.
FIG. 8 is a schematic top view of the handheld device in FIG. 6.
FIG. 9 illustrates a combination of the handheld device in FIG. 6 and an exemplary first mobile electronic device consistent with various embodiments of the present disclosure.
FIG. 10 is a schematic perspective view of a communication device of the photographing device in FIG. 1.
FIGs. 11-21 are schematic flow charts of some exemplary control methods consistent with various embodiments of the present disclosure.

### DETAILED DESCRIPTION OF THE EMBODIMENTS

The embodiments of the present disclosure are described in detail below. Examples of the embodiments are shown in the accompanying drawings, where the same or similar reference numerals indicate the same or similar elements, or elements with the same or similar functions. The following embodiments described with reference to the drawings are exemplary, and are only used to explain the present disclosure, and cannot be understood as a limitation to the present application.

In the description of this disclosure, it should be understood that the terms indicating the orientation or positional relationship such as "center," "length," "width," "thickness," "upper," "lower," "left," "right," "bottom," "inner," "outer" are based on the orientation or positional relationship shown in the drawings. They are only for the convenience of describing the disclosure and simplifying the description, and do not indicate or imply that the devices or elements referred to must have a specific position or orientation. Therefore, they should not limit the scope of the present disclosure. In addition, the terms "first" and "second" are only used for descriptive purposes and may not be understood as indicating or implying relative importance or implicitly indicating the number of indicated technical features. Therefore, the features associated with "first" and "second" may explicitly or implicitly include one or more of the features. In the description of this disclosure, "plurality of' means two or more than two, unless otherwise specifically defined. In the description of this disclosure, it should be noted that the terms "mounting," "connection," and "connection" should be interpreted broadly unless otherwise clearly specified and limited. For example, it may be a fixed connection or a detachable connection. It may be connected or integrally connected. It may be mechanically connected, or electrically connected or may communicate with each other. It may be directly connected, or indirectly connected through an intermediate medium. It may be the internal communication of two components or the interaction of two components relationship. For those of ordinary skill in the art, the specific meanings of the above terms in this disclosure may be understood according to specific circumstances.

The following disclosure provides many different embodiments or examples for realizing different structures of the present disclosure. In order to simplify the present disclosure, the components and settings of specific examples are described below. Of course, they are only examples, and are not intended to limit the disclosure. In addition, the present disclosure may repeat reference numbers and/or reference letters in different examples, and this repetition is for the purpose of simplification and clarity, and does not indicate the relationship between the various embodiments and/or settings discussed. In addition, this application provides examples of various specific processes and materials, but those of ordinary skill in the art may be aware of the application of other processes and/or the use of other materials.

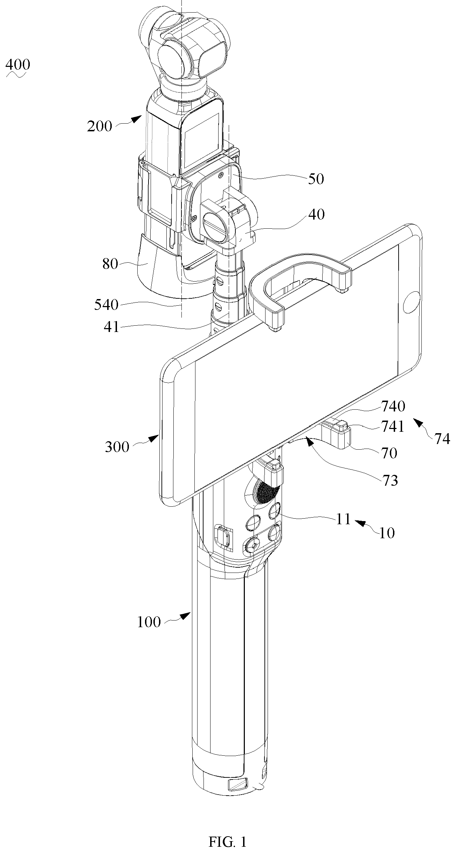

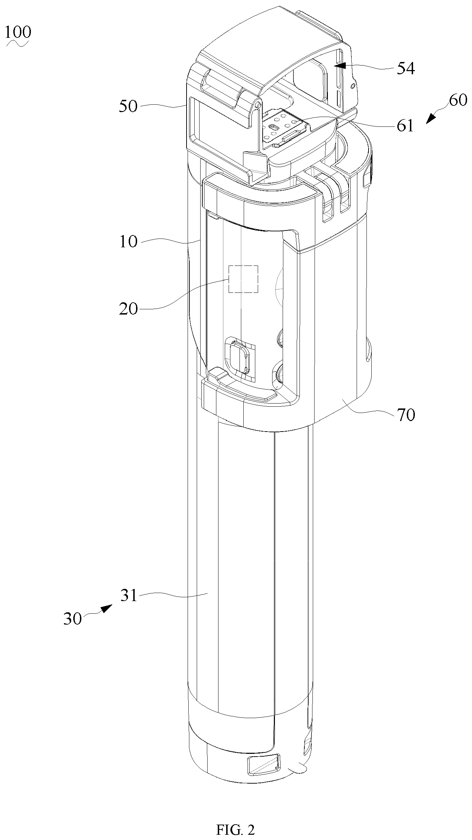

As illustrated in FIG. 1 and FIG. 2, the present disclosure provides a handheld device 100 which may be applied to a first mobile electronic device 200. The handheld device 100 includes a fixing bracket 50, a telescopic rod 40, a handheld member 10, and a power source 20. The fixing bracket 50 is mounted at the telescopic rod 40, and the telescopic rod 40 is mounted at the handheld member 10. The power source 20 is disposed at the handheld member 10. The fixing bracket 50 may be configured to detachably connect the first mobile electronic device 200. After the fixing bracket 50 is configured to detachably connect the first mobile electronic device 200, the handheld device 100 may be configured to provide electrical energy to the first mobile electronic device 200 through the power source 20, and to control the first mobile electronic device 200 to start up and/or shut down.

As illustrated in FIG. 1 and FIG. 2, the present disclosure provides a photographing device 400. The photographing device 400 includes the handheld device 100 and the first mobile electronic device 200. The handheld device 100 includes the fixing bracket 50, the telescopic rod 40, the handheld member 10, and the power source 20. The fixing bracket 50 is mounted at the telescopic rod 40, and the telescopic rod 40 is mounted at the handheld member 10. The power source 20 is disposed at the handheld member 10. The fixing bracket 50 may be configured to detachably connect the first mobile electronic device 200. After the fixing bracket 50 is configured to detachably connect the first mobile electronic device 200, the handheld device 100 may be configured to provide electrical energy to the first mobile electronic device 200 through the power source 20, and to control the first mobile electronic device 200 to start up and/or shut down.

As illustrated in FIG. 1, FIG. 2, and FIG. 11, the present disclosure provides a control method for a handheld device 100. The handheld device 100 includes the fixing bracket 50, the telescopic rod 40, the handheld member 10, and the power source 20. The fixing bracket 50 is mounted at the telescopic rod 40, and the telescopic rod 40 is mounted at the handheld member 10. The power source 20 is disposed at the handheld member 10. An electrical connection mechanism 60 is disposed at the fixing bracket 50 for electrically connecting the first mobile electronic device 200. The control method includes: receiving an input operation from a user with respect to the handheld device 100; generating a startup instruction or a shutdown instruction according to the input operation; transmitting the startup instruction or the shutdown instruction to the first mobile electronic device 200; when the startup instruction is transmitted to the first mobile electronic device 200, turning on the power source 20 to provide electricity to the first mobile electronic device 200 and controlling the first mobile electronic device 200 to be turned on by one button; and when the shutdown instruction is transmitted to the first mobile electronic device 200, controlling the first mobile electronic device 200 to be turned off by one button.

As illustrated in FIG. 1 and FIG. 2, in one embodiment, the handheld device 100 includes the fixing bracket 50, the telescopic rod 40, a handheld member 10, and the power source 20. The fixing bracket 50 is mounted at the telescopic rod 40, and the telescopic rod 40 is mounted at the handheld member 10. The power source 20 is disposed at the handheld member 10. The electrical connection mechanism 60 is disposed at the fixing bracket 50 for electrically connecting the first mobile electronic device 200. The handheld member 10 includes a controller 11. The controller 11 may be configured for: receiving input operation from a user with respect to the handheld device 100; generating a startup instruction or a shutdown instruction according to the input operation; transmitting the startup instruction or the shutdown instruction to the first mobile electronic device 200; when the startup instruction is transmitted to the first mobile electronic device 200, turning on the power source 20 to provide electricity to the first mobile electronic device 200 and controlling the first mobile electronic device 200 to be turned on by one button; and when the shutdown instruction is transmitted to the first mobile electronic device 200, controlling the first mobile electronic device 200 to be turned off by one button.

As illustrated in FIG. 1 and FIG. 2, in one embodiment, the photographing device 400 includes the handheld device 100 and the first mobile electronic device 200. The handheld device 100 includes the fixing bracket 50, the telescopic rod 40, the handheld member 10, and the power source 20. The fixing bracket 50 is mounted at the telescopic rod 40, and the telescopic rod 40 is mounted at the handheld member 10. The power source 20 is disposed at the handheld member 10. The electrical connection mechanism 60 is disposed at the fixing bracket 50 for electrically connecting the first mobile electronic device 200. The handheld member 10 includes a controller 11. The controller 11 may be configured for: receiving input operation from a user with respect to the handheld device 100; generating a startup instruction or a shutdown instruction according to the input operation; transmitting the startup instruction or the shutdown instruction to the first mobile electronic device 200; when the startup instruction is transmitted to the first mobile electronic device 200, turning on the power source 20 to provide electricity to the first mobile electronic device 200 and controlling the first mobile electronic device 200 to be turned on by one button; and when the shutdown instruction is transmitted to the first mobile electronic device 200, controlling the first mobile electronic device 200 to be turned off by one button.

According to the handheld device 100, the photographing device 400, and the control method provided by the present disclosure, after the first mobile electronic device 200 is mounted at the fixing bracket 50, the handheld device 100 may provide electrical energy to the first mobile electronic device 200 through the power source 20. It may be unnecessary for the user to carry a power bank and the user's burden may be alleviated. Further, the handheld device 100 may control the first mobile electronic device 200 to start up and/or shut down. It may be unnecessary for the user to remove the mobile electronic device to turn on and/or turn off the mobile electronic device. Convenience of the user's process, diversification of functions, and the user experience may be improved.

As illustrated in FIG. 1, in one embodiment, the photographing device 400 includes the handheld device 100 and mobile electronic devices. The mobile electronic devices include the first mobile electronic device 200 and/or a second mobile electronic device 300. The first mobile electronic device 200 and the second mobile electronic device 300 may be detachably mounted at the handheld device 100. The mobile electronic devices (the first mobile electronic device 200 and the second mobile electronic device 300) may be cell phones, tablets, cameras, or gimbals with cameras. The second mobile electronic device 300 may be a remote for the first mobile electronic device 200, or a display device with only a display function. In some other embodiments, a number of the mobile electronic devices may be configured according to actual need. For example, in one embodiment, the number of mobile electronic devices may be one. In some other embodiment, the number of mobile electronic devices may be three or more. In the present disclosure, the embodiments where the first mobile electronic device 200 is a handheld gimbal, the second mobile electronic device 300 is a cell phone, and the photographing device 400 includes the first mobile electronic device 200 and the handheld device 100, is used as an example to illustrate the present disclosure.

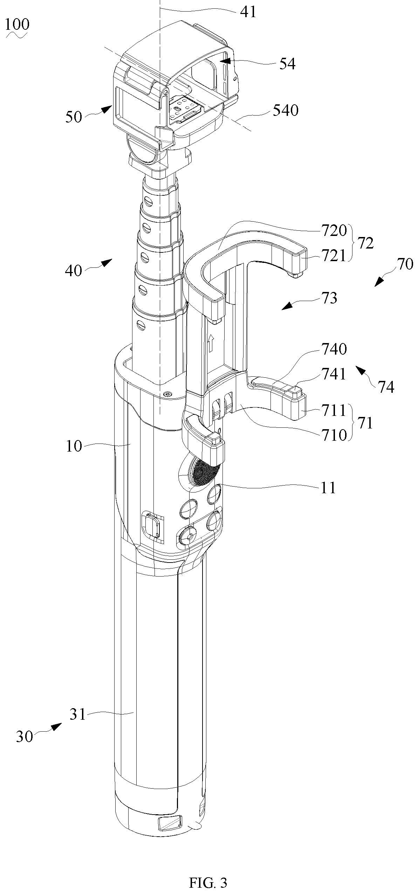

As illustrated in FIG. 2 and FIG. 3, the handheld device 100 includes the handheld member 10, the power source 20, the tripod 30, the telescopic rod 40, the fixing bracket 50, the electrical connection mechanism 60, and the clip assembly 70. The telescopic rod 40, the power source 20, the tripod 30, and the clip assembly 70 are disposed at the handheld member 10, and the fixing bracket 50 are disposed at the telescopic rod 40. It may be understood that the tripod 30 may also be a tripod that does not have a function to expand as a stand, but a columnar structure that is detachably connected or fixedly connected to the handheld member 10, or may even be a part of the handheld member 10.

The handheld member 10 may have a tubular shape, and the user may lift the handheld device 100 by holding the handheld member 10. The handheld member 10 may be provided with a cavity (not shown), and the cavity may penetrate the handheld member 10 in the axial direction. The power supply 20 may be housed in the cavity of the handheld member 10. The power supply 20 may be used to provide electrical energy to other components of the handheld device 100 and the mobile electronic device mounted at the handheld device 100 (the first mobile electronic device 200 and/or the second mobile electronic device 300). The telescopic rod 40 may pass through the cavity, and the tripod 30 may be arranged at one end of the handheld member 10. The handheld member 10 may be provided with a controller 11 which may be electrically connected to the power supply 20. The controller 11 may be provided with a plurality of control buttons and may be used as the control center of the handheld device 100. The user may control the telescopic rod 40 through the controller 11 to change the length, and to control the mobile electronic devices mounted at the handheld device 100 to perform related operations.

The tripod 30 may include a plurality of legs 31. For example, in one embodiment, the tripod 30 may include three legs 31. Each leg 31 may be rotatably connected with the handheld member 10. Each leg 31 and the handheld member 10 may be connected by a hinge shaft, such that each leg 31 may rotate with respect to the handheld member 10 around the hinge shaft to realize the free transformation of the tripod 30 between the open state and the folded state. As shown in Fig. 3, the tripod 30 is in a folded state. When the tripod 30 is in the folded state, the plurality of legs 31 may enclose to form a receiving cavity (not shown), and the telescopic rod 40 may extend into the receiving cavity.

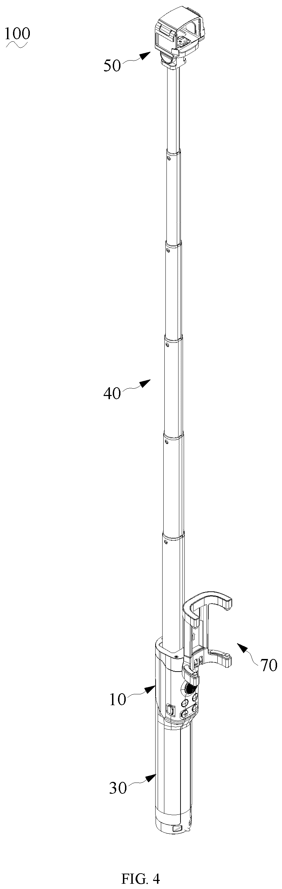

As illustrated in FIG. 3 and FIG. 4, the telescopic rod 40 penetrates through and is disposed in the handheld member 10. The telescopic rod 40 may be formed by sleeving and connecting a plurality of tube rod pieces sequentially from a small inner diameter to a large inner diameter. An end of one of the plurality of tube rod pieces with the largest inner diameter may be connected to an inner wall of the handheld member 10, and one of the plurality of tube rod pieces with the smallest inner diameter may be used to connect the fixing bracket 50. The user may pull the fixing bracket 50 a direction away from the handheld member 10 to elongate the telescopic rod 40, or may push fixing bracket 50 in a direction toward the handheld member 10 to retract the telescopic rod 40. The user may control the automatic elongation and/or retraction of the telescopic rod 40 through the controller 11. In this way, the telescopic rod 40 may achieve a telescopic function, that is, the telescopic rod 40 may transform between the retracted state and the elongated state along the axis 41 of the telescopic rod 40 with respect to the handheld member 10. In the retracted state, the telescopic rod 40 may be accommodated in the accommodating cavity of the tripod 30 to the maximum extent, or in other words, the telescopic rod 40 may be completely or mostly accommodated in the accommodating cavity of the tripod 30, as shown in FIG. 2. In the elongated state, the telescopic rod 40 may be expanded or extended to the maximum, as shown in FIG. 4.

When the telescopic rod 40 is in the retracted state, the tripod 30 may wrap the telescopic rod 40 in the accommodating cavity in a folded state, and the tripod 30 may be used as a part of a portion handheld by the user. Therefore the length of the handheld member 10 may be reduced and the weight of the handheld member 10 may be reduced. Convenience of using the handheld device 100 may be improved. When the telescopic rod 40 is in the expanded state, the tripod 30 may be in the folded state to increase the length further, which may be convenient for the user to hold for handheld remote viewing. The user may also make the tripod 30 in an open state to be placed on supports including the ground or a desktop for photographing.

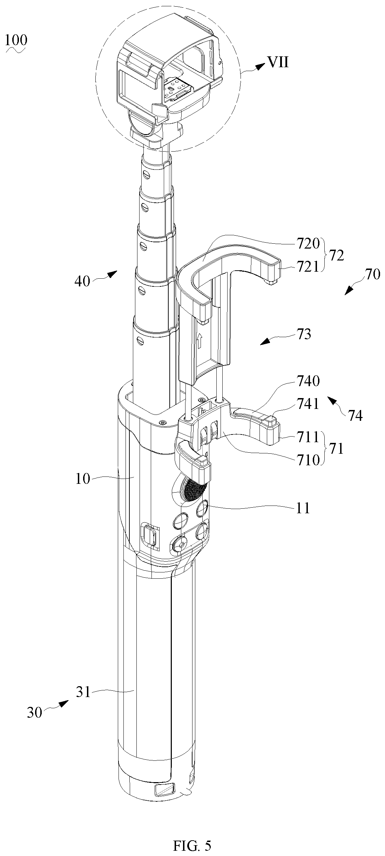

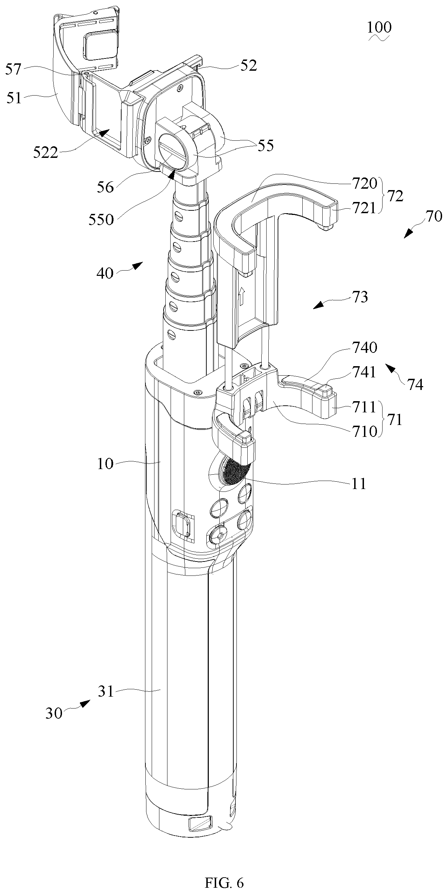

As illustrated in FIG. 5 and FIG. 6, the fixing bracket 50 is detachably mounted at an end of the telescopic rod 40 away from the handheld member 10. After the fixing bracket 50 is detachably mounted at the telescopic rod 40, the fixing bracket 50 is capable of rotating with respect to the telescopic rod 40. In detail, the fixing bracket 50 includes two opposite lugs 500. Each lug 55 is provided with a bearing hole 550. An end of the telescopic rod 40 is located between the two lugs 55, and the fixing bracket 50 is connected to the telescopic rod 40 through a connecting piece 56. For example, the connecting piece 45 may pass through the end of the telescopic rod 40 and be supported in the bearing holes 550 on both sides. Among it, the connecting piece 56 may be a damping shaft. The damping shaft may facilitate the fixing bracket 50 to be able to rotate to any position and to be able to stay at this position without the assistance of other parts when the fixing bracket 50 rotates with respect to the telescopic rod 40. Thereby, the stability and safety of the first mobile electronic device 200 mounted at the fixing bracket 50 may be ensured.

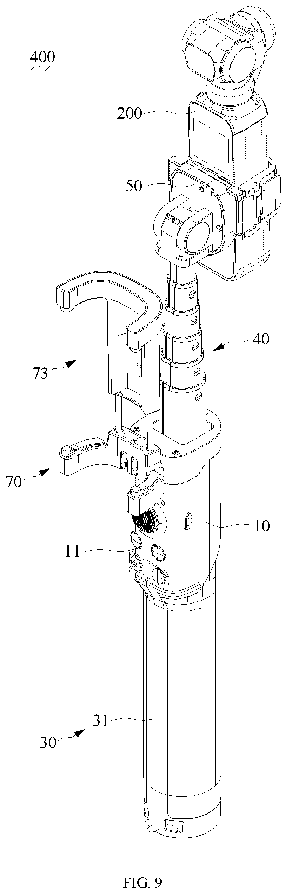

Further, after the first mobile electronic device 200 is mounted at the fixing bracket 50 (as illustrated in FIG. 9), the user may adjust an angle of the fixing bracket 50 with respect to the telescopic rod 40, to adjust the orientation of the first mobile electronic device 200, during the operation process. In some other embodiments, the fixing bracket 50 may be rotatably connected to the telescopic rod 40 through other hinge structures.

In an example, the damping shaft may be a polygonal shaft, and the bearing holes 550 opened in the lugs 55 may also be made into polygonal holes matching the shape of the polygonal shaft, such as a regular hexagonal hole. Correspondingly, the shape of the shaft matches the shape of the bearing holes 550 to achieve the restriction on the rotation angle of the fixing bracket 50.

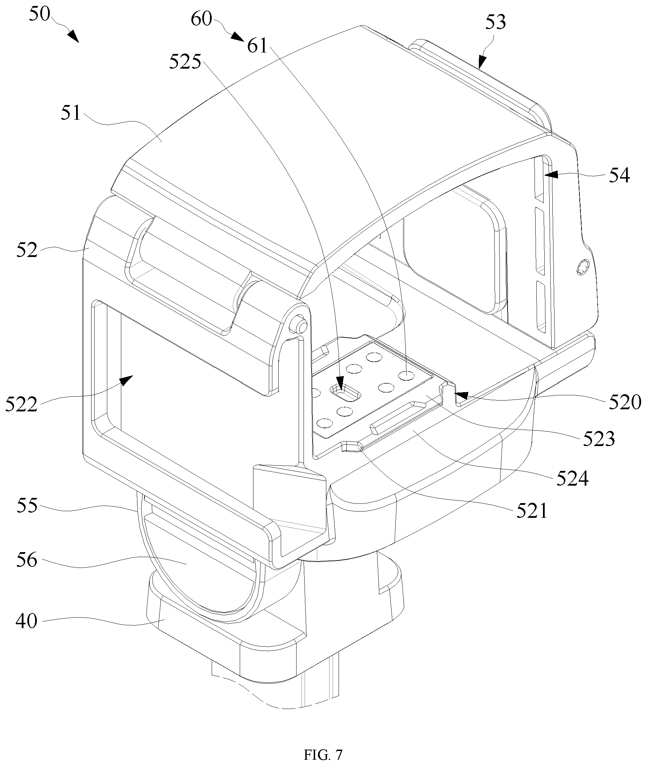

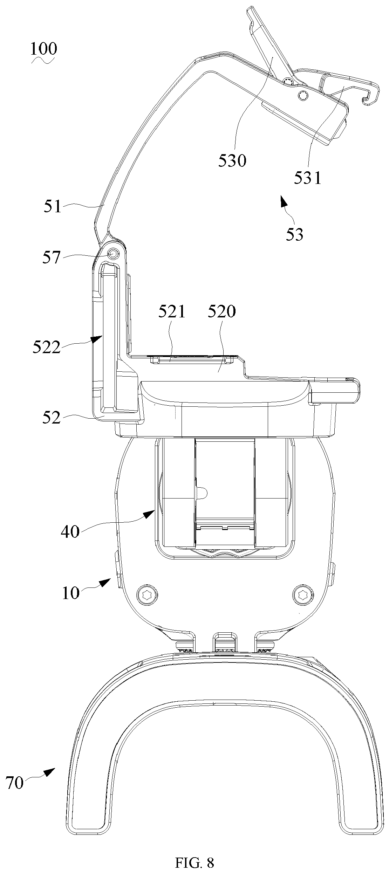

As illustrated in FIG. 7 and FIG. 8, the fixing bracket 50 includes a first buckle member 51, a second buckle member 52, and a buckle structure 53. The first buckle member 51 and the second buckle member 52 are rotatably connected, and the buckle structure 53 is used to fixing the first buckle member 51 and the second buckle member 52 relative to each other.

The first buckle member 51 and the second buckle member 52 may be in a first state and a second state. In the first state, the first buckle member 51 and the second buckle member 52 may be fixed with respect to each other and form an opening 54. At least a portion of the first mobile electronic device may be accommodated in the opening 54 (shown in FIG. 5). In the second state, the first buckle member 51 and the second buckle member 52 may be able to rotate with respect to each other, that is, the first buckle member 51 may be able to rotate along the rotation axis 57 such that the first mobile electronic device 200 may be removed from the fixing bracket 50.

The lugs 55 may be disposed at the second buckle member 52, and the second buckle member 52 may be rotatably mounted at the end of the telescopic rod 40 away from the handheld member 10 through the lugs 55 and the connecting element 56. The opening 54 formed by the first buckle member 51 and the second buckle member 52 may have a closed ring shape. For example, the opening 54 may be a circular ring, a rectangular ring, or another polygonal ring. The shape of the opening 54 may be configured according to the contour of the first mobile electronic device 200. When the first mobile electronic device 200 is partially accommodated in the opening 54, at least one of the first buckle member 51 or the second buckle member 52 may be provided with a structure for locking the first mobile electronic device 200 (such as the structure including the boss 520 and the protrusion 521 which will be described below). For example, the first buckle member 51 may be provided with a structure for locking the first mobile electronic device 200, or the second buckle member 52 may be provided with a structure for locking the first mobile electronic device 200, or each of the first buckle member 51 and the second buckle member 52 may be provided with a structure for locking the first mobile electronic device 200. The first mobile electronic device 200 may include a gimbal and a main body part supporting the gimbal. The main body part may be partially fixed in the opening 54. It may be understood that, in some examples, the closed loop formed by the first buckle member 51 and the second buckle member 52 when buckled may match the shape of a certain part of the first mobile electronic device 200, such that The fixing bracket 50 may provide clamping force from the periphery of the first mobile electronic device 200 to further prevent the first mobile electronic device 200 from falling from the opening 54, especially when a centerline of the opening 54 is arranged obliquely to the horizontal plane for meeting the photographing requirements(for example, when the centerline 540 of the opening 54 is arranged perpendicular to the horizontal plane).

As illustrated in FIG. 7, the first buckle member 51 includes a first half-enclosing frame and the first half-enclosing frame has an L shape. The second buckle member 52 includes a second half-enclosing frame and the second half-enclosing frame has an L shape. The second half-enclosing frame and the first half-enclosing frame are complementary to each other and may be buckled to form the ring-shaped opening 54.

As illustrated in FIG. 7 and FIG. 8, the fixing bracket 50 is provided with the boss 520 and the protrusion 521. The boss 520 includes a surface 523 and a side face 524. The surface 523 of the boss 520 are provided with a positioning groove 525, and the protrusion 521 is disposed at the side face 524 of the boss 520. Among it, the positioning groove 525 may be used to cooperate with a telescopic positioning block (not shown) provided on the first mobile electronic device 200, and the protrusion 521 may be used to slidably cooperate with a sliding groove (not shown) provided on the first mobile electronic device 200. The positioning groove 525 and the protrusion 521 may be used together to lock the first mobile electronic device 200 in the opening 54. It may be understood that the first mobile electronic device 200 may be provided with a positioning groove, and the surface of the boss 520 may be provided with a compressible positioning block. In addition, locking the first mobile electronic device 200 in the opening 54 may include completely accommodating and locking the first mobile electronic device 200 in the opening, or partially accommodating and locking the first mobile electronic device 200 in the opening.

It should be understood that the boss 520 and the protrusion 521 may be arranged on the first half-enclosing frame (or the first buckle member 51), or the boss 520 and the protrusion 521 may be arranged on the second half-enclosing frame (or on the second buckle member 52), or, the boss 520 and the protrusion 521 may both be provided on the first half-enclosing frame (or the first buckle member 51) and the second half-enclosing frame (or the second buckle member 52).

In the present embodiment, the boss 520 and the protrusion 521 may be arranged on the second half-enclosing frame (or the second buckle member 52). The first mobile electronic device 200 may be locked in the opening 54 through the boss 520 and the protrusion 521 on the second half-enclosing frame (or the second buckle member 52). The supporting lugs 55 may be arranged on the second half-enclosing frame, and the second half-enclosing frame may be rotatably mounted at the end of the telescopic rod 40 away from the handheld member 10 through the lugs 55 and the connecting element 56. After the first half-enclosing frame and the second half-enclosing frame enclose to form the opening 54, the second half-enclosing frame may rotate with respect to the telescopic rod 40 such that the centerline 540 of the opening 54 (refer to FIGs. 1-3) is in a horizontal position or vertical position.

When the centerline 540 of the opening 54 is in the horizontal position, the centerline 540 of the opening 54 is perpendicular to the axis 41 of the telescopic rod 40, as shown in FIG. 3. When the centerline 540 of the opening 54 is in the vertical position, the centerline 540 of the opening 54 is parallel to the axis 41 of the telescopic rod 40, as shown in FIG. 1. Of course, in other embodiments, the second half-enclosing frame may be rotated with respect to the telescopic rod 40 such that the centerline 540 of the opening 54 is in another position. For example, the second half-enclosing frame may be rotated with respect to the telescopic rod 40 to make the centerline 540 of the opening 54 and the axis 41 of the telescopic rod 40 are inclined to each other.

It should be noted that the first mobile electronic device may be a handheld gimbal, that is, it includes a main body and a gimbal. A camera may be mounted at the gimbal. In some examples, the shooting angle of the handheld gimbal may be adjusted by rotating the fixing bracket 50 with respect to the telescopic rod 40. In other examples, the extension direction of the free end of the main body of the handheld gimbal may be adjusted by rotating the fixing bracket relative 50 to the telescopic rod 40, such that the handheld gimbal may enter different shooting modes and obtain different video effects. For example, when the fixed frame 50 is rotated to the horizontal position of the centerline of the opening, the handheld gimbal may enter the flashlight mode; when the fixed frame 50 is rotated to the vertical position of the centerline of the opening, the handheld gimbal may enter the vertical mode or upside-down shooting mode. It may be understood that the rotation of the fixed frame 50 with respect to the telescopic rod 40 may be any angle that may be achieved, and the shooting mode of the handheld gimbal is not limited to the above description and may be specifically determined according to the posture of the main body of the handheld gimbal.

As illustrated in FIG. 7 and FIG. 8, in one embodiment, the second half-enclosing frame (or the second buckle member 52) is provided with a coupling groove 522. The coupling groove 522 is opened on the outer surface of the second half-enclosing frame (or the second buckle member 52), and is used to hold a reserved component. The reserved component may be shooting equipment such as soft light, reflector, flash, quartz lamp, microphone, or another device.

Referring to FIG. 8, the buckle structure 53 is provided on the first buckle member 51 (the first half-enclosing frame). The buckle structure 53 makes the first buckle member 51 (or the first half-enclosing frame) and the second buckle member 52 (or the second half-enclosing frame) maintained in the first state. The buckle structure 53 includes a first buckle element 530 and a second buckle element 531. The first buckle element 530 is rotatably disposed at the first buckle member 51, and the second buckle element 531 is rotatably disposed at the first buckle element 530.

In the second state, if the first buckle element 530 rotates in a first rotation direction and drives the second buckle element 531 to press the second buckle element 52 to contact the first buckle element 51, the first buckle element 530 may rotate in a second rotation direction and drive the second buckle element 531 to tighten the first buckle member 51 and the second buckle member 52, such that the first buckle member 51 and the second buckle member 52 are in the first state. That is, the first buckle member 51 and the second buckle member 52 may transit from the second state shown in FIG. 8 to the first state shown in FIG. 7. In the first state, the first buckle element 530 may rotate in the first rotation direction and drive the second buckle element 531 to loosen the second buckle element 52, such that the first buckle element 51 and the second buckle element 52 is in the second state. That is, the first buckle member 51 and the second buckle member 52 may transit from the first state shown in FIG. 7 to the second state shown in FIG. 8. The first rotation direction may be a clockwise direction, and the second rotation direction may be counterclockwise.

Referring to FIG. 7 and FIG. 9, the electrical connection mechanism 60 is configured to electrically connect the controller 11 and the first mobile electronic device 200 (including power supply connection and communication connection). The electrical connection mechanism 60 includes a contact point 61 and a communication line (not shown in the figures). The contact point 61 is disposed at the boss 520 of the fixing bracket 50 and the communication line passes through the telescopic rod 40. One end of the communication line is electrically connected to the contact point 61, and another end of the communication line is electrically connected to the controller 11. The contact point 61 includes a power supply contact point and a communication contact point. Correspondingly, after the first mobile electronic device 200 is mounted at the fixed bracket 50, the contact point (not shown in the figures) on the first mobile electronic device 200 and the contacts point 61 on the fixing bracket 50 may mate with each other to realize that the handheld device 100 provides power to the first mobile electronic device 200 and the handheld device 100 controls the startup (or turn-on) and shutdown (or turn-off) of the first mobile electronic device 200. In addition, there may be a plurality of contact points 61, and the plurality of contact points 61 may form a circular or rectangular array, to improve the reliability of the electrical connection with the contact points on the first mobile electronic device 200.

As illustrated in FIG. 2 and FIG. 3, a clip assembly 70 is detachably mounted at the handheld member 10. After the clip assembly 70 is mounted at the handheld 10, the clip assembly 70 may rotate with respect to the handheld member 10. The clip assembly 70 includes a first clamp member 71, a second clamp member 72, and a stabilization member 74. The first clamp member 71 may be disposed at the handheld member 10, and the second clamp member 72 may be disposed at the first clamp member 71. The stabilization member 74 may be disposed at the first clamp member 71 and the second clamp member 72.

The first clamp member 71 and the second clamp member 72 jointly enclose to form a clamping space 73, and the clamping space 73 can be used to accommodate the second mobile electronic device 300, as shown in FIG. 1. The clip assembly 70 can selectively connect or detach the second mobile electronic device 300 by changing the size of the clamping space 73. For example, the first clamp member 71 and the second clamp member 72 can move back to increase the size of the clamping space 73, as shown in FIG. 5. The first clamp member 71 and the second clamp member 72 may move opposite to each other to reduce the size of the clamping space 73, as shown in FIG. 3.

In an example, the first clamp member 71 and the second clamp member 72 may be connected by an elastic element, such that the clip assembly 70 can change the size of the clamping space 73. For example, the second clamp member 72 may be connected to the first clamp member 71 by a spring, such that the second clamp member 72 can move away from the first clamp member 71 under the action of external force to increase the clamping space 73. Further, the second clamp member 72 can move toward the first clamp member 71 when the external force is released to reduce the size of the clamping space 73.

As illustrated in FIG. 3 and FIG. 5, the first clamp member 71 includes a first main body 710 and a first clamp arm 711 connected to each other. The first main body 710 is detachably mounted at the handheld member 10. Further, after the first main body 710 is mounted at the handheld member 10, the first main body 710 can rotate with respect to the handheld member 10. The first clamp arm 711 may be disposed at and protrude from the first body 710. The second clamp member 72 includes a second main body 720 and a second clamp arm 721 connected to each other. The second main body 720 is connected to the first main body 710 by an elastic element. The second clamp arm 721 is disposed at and protrude from the second main body 720 corresponding to the first clamp arm 711. Each of the first clamp arm 711 and the second clamp arm 721 may include two clamp arm claws. Correspondingly, after the second mobile electronic device 300 is mounted to the clip assembly 70, the plurality of clamp arm claws may cooperate to improve the force balance of the second mobile electronic device 300. That may be beneficial to enhance the stability of the clip assembly 70 to clamp the second mobile electronic device 300.

In detail, the clip assembly 70 can rotate with respect to the handle 10 to a first position and a second position. In the first position, the first clamp arm 711 may be located on the side of the first main body 710 opposite to the handle 10, and the second clamp arm 721 may be located on the side of the second main body 720 opposite to the handle 10. In other words, the controller 11 may be located outside the clamping space 73 of the clip assembly 70. At this time, the clip assembly 70 is rotated to the first position, which is referred to as the clip assembly 70 in an unfolded state, as shown in FIG. 3.

In the first position, the clip assembly 70 can be turned to the second position. For example, the clip assembly 70 can be turned in a clockwise direction until the first clamp arm 711 is located on the side of the first body 710 facing the handle 10 (or the controller 11), and the second clamp arm 721 is located on a side of the second body 720 facing the handle 10 (or the controller 11). In other words, the clip assembly 70 can be turned over to a position covering the controller 11 or a position that the controller 11 is accommodated in the clamping space 73 of the clip assembly 70. At this time, the clip assembly 70 is rotated to the second position, which means that the clip assembly 70 is in the stored state, as shown in FIG. 1.

As illustrated in FIG. 1 and FIG. 3, the stabilization portion 74 includes a plurality of soft pads 740 and a plurality of blocks 741. When the second mobile electronic device 300 is mounted in the clamping space 73, the plurality of soft pads 740 may be arranged at a surface of the first clamp arm 711 (or the two clamp arm claws of the first clamp arm 711) facing the second mobile electronic device 300. The plurality of soft pads 740 may also be mounted at the second clamp arm 721 (or the two clamp arm claws of the second clamp arm 721) facing the second mobile electronic device 300. The plurality of soft pads 740 may be made of foam, silica gel, sponge strips, or other materials. Correspondingly, the plurality of soft pads 740 may increase the contact area between the clip assembly 70 and the second mobile electronic device 300 to increase the friction between the second mobile electronic device 300 and the clip assembly 70, thereby improving the stability of the clip assembly 70 holding the second mobile electronic device 300.

The plurality of blocks 741 may be respectively disposed at one end of the first clamp arm 711 away from the first body 710 (that is, ends of the two clamp arm claws of the first clamp arm 711 away from the first body 710), and one end of the clamp arm 721 away from the second body 720 (that is, ends of the two clamp arm claws of the second clamp arm 721 away from the second body 720). Correspondingly, after the second mobile electronic device 300 is mounted in the clip assembly 70, the plurality of blocks 741 may limit the movement distance of the second mobile electronic device 300 in the extending direction of the first clamp arm 711 (clamp arm claws), to avoid detachment of the second mobile electronic device 300 from the clip assembly 70 in the extending direction of the first clamp arm 711 (clamp arm claws). The plurality of blocks 741 may also restrict the movement distance of the second mobile electronic device 300 in the extending direction of the second clamp arm 721 (clamp arm claws), to prevent the detachment of the second mobile electronic device 300 from the clip assembly 70 in the extending direction of the second holding arm 721 (clamp arm claws).

In an example, the clip assembly 70 may be provided with a connection socket, and the connection socket may be electrically connected to the controller 11. When the second mobile electronic device 300 is mounted at the clip assembly 70 and plugged into the connection socket, the controller 11 may control the power supply 20 to provide power to the second mobile electronic device 300. Or, the controller 11 may communicate with the second mobile electronic device 300. Or, the controller 11 may control the power source 20 to provide power to the second mobile electronic device 300 and communicate with the second mobile electronic device 300.

In an example, the first mobile electronic device 200 may be provided with an external interface, and the external interface may be detachably mounted at the first mobile electronic device 200. The clip assembly 70 may be provided with a groove interface, and the groove interface may be configured to accommodate the external interface of the first mobile electronic device 200.

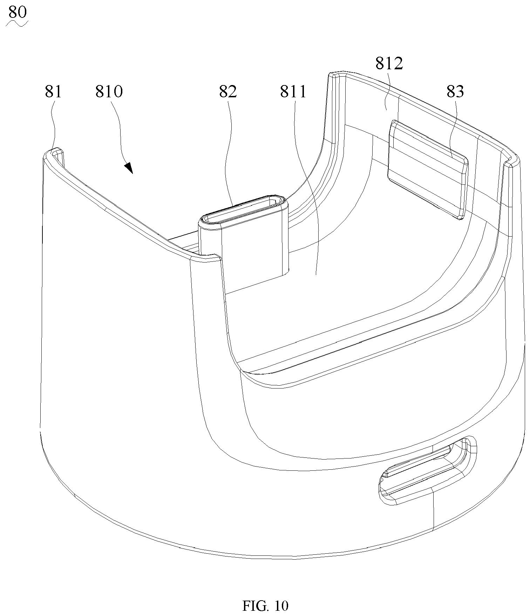

As illustrated in FIG. 1 and FIG. 10, in an example, the handheld device 100 further includes a communication device 80. The communication device 80 may be used for the wireless communication connection between the second mobile electronic device 300 and the first mobile electronic device 200. The communication device 80 includes a base 81, a connection interface 82, and a card block 83. The base 81 can be provided with a mounting groove 810, a connection interface 82, and a clamp block 83. The connection interface 92 is disposed at a bottom surface 811 of the mounting groove 810, and the clamp block 83 is disposed at a side face 812 of the mounting groove 810. The first mobile electronic device 200 is detachably mounted in the mounting groove 810. After the first mobile electronic device 200 is mounted in mounting groove 810, the communication device 80 is electrically connected to the first mobile electronic device 200 through the connection interface 82. The clamp block 83 may squeeze an outer side face of the first mobile electronic device 200, such that the first mobile electronic device 200 cannot be easily detached from the mounting groove 810.

The communication device 80 may include a first communication mode and a second communication mode. After the first mobile electronic device 200 is connected to the second mobile electronic device 300 through the first communication mode, a communication mode between the first mobile electronic device 200 and the second mobile electronic device 300 can be automatically switched to the second communication mode. After the first mobile electronic device 200 and the second mobile electronic device 300 communicate with each other in the second communication mode, the communication device 80 may turn off the first communication mode between the two mobile electronic devices.

Of course, in other embodiments, after the first mobile electronic device 200 and the second mobile electronic device 300 communicate with each other in the second communication mode, the communication device 80 may not turn off the first communication mode between the two mobile electronic devices (the first mobile electronic device 200 and the second mobile electronic device 300), and the communication device 80 may set the priority of the second communication mode higher than that of the first communication mode. That is, the first mobile electronic device 200 and the second mobile electronic device 300 can perform data transmission through the second communication mode under normal circumstances. When the communication device 80 detects that the communication signal of the second communication mode between the two mobile electronic devices is not good, the communication device 80 may transmit a part of the data or all of the data through the first communication mode. Further, when it detects that the communication signal of the second communication mode between the two mobile electronic devices is restored to a better state, part of the data or all of the data may be automatically re-transmitted through the second communication mode.

The first communication mode may be a Bluetooth mode, and the second communication mode may be a wifi mode. Of course, the first communication mode and the second communication mode may also be wireless communication modes including ZigBee or infrared.

In an example, the first mobile electronic device 200 and the second mobile electronic device 300 may simultaneously perform data transmission through the first communication mode and the second communication mode. For example, the data of the first mobile electronic device 200 may be transmitted to the second mobile electronic device 300 through the first communication mode, and the data of the second mobile electronic device 300 may be transmitted to the first mobile electronic device 200 through the second communication mode; or the data of the first mobile electronic device 200 may be transmitted to the second mobile electronic device 300 through the second communication mode and the data of the second mobile electronic device 300 may be transmitted to the first mobile electronic device 200 through the first communication mode. Alternatively, when the first mobile electronic device 200 and the second mobile electronic device 300 are performing data transmission, the communication device 80 may determine the current communication quality of the two communication modes by itself, such that the better communication mode may be selected according to the communication quality to transmit data between two mobile electronic devices.

In an example, the first mobile electronic device 200 may be an electronic device with a photographing function including as a camera or a gimbal with a camera, and the second mobile electronic device 300 may be an electronic device with a display function including a mobile phone or a tablet computer. The user may control the telescopic rod 40, the first mobile electronic device 200, the second mobile electronic device 300, and the like through the controller 11 of the handheld member 10.

A variety of function buttons may be provided on the controller 11, and different function buttons may be provided for different control objects. For example, when a control object is the telescopic rod 40, the function of the button may include: expanding the telescopic rod 40, retracting the telescopic rod 40, and so on. When the control object is the first mobile electronic device 200, the function of the button may include: controlling the first mobile electronic device 200 to start (or turn on) or turn off (or shut down), providing power to or stopping providing power to the first mobile electronic device 200, controlling the first mobile electronic device 200 to enter a camera mode, controlling the first mobile electronic device 200 to photograph forward or backward, controlling the first mobile electronic device 200 to focus, controlling the first mobile electronic device 200 to zoom in, controlling the first mobile electronic device 200 to reduce a screen, controlling the first mobile electronic device 200 to enter a video mode, controlling the first mobile electronic device 200 to take photos or videos, controlling the first mobile electronic device 200 to stop or pause photographing, or controlling the first mobile electronic device 200 to switch filters, and so on. When the control object is the second mobile electronic device 300, the function of the button may include: controlling the second mobile electronic device 300 to start (or turn on) or turn off (or shut down), or providing power to or stopping providing power to the second mobile electronic device 300, etc.

Of course, in other embodiments, the controller 11 may also be provided with a touch screen, and the touch screen may be provided with virtual buttons including the above-mentioned functions. Or, the controller 11 may be provided with both function buttons and a touch screen, and the user may use a combination operation of the function buttons and the virtual buttons on the touch screen to control the telescopic rod 40, the first mobile electronic device 200, the second mobile electronic device 300, and the like.

In the above embodiment, the user may perform corresponding operations through the controller 11. Further, the user may also perform corresponding operations through the second mobile electronic device 300. For example, the second mobile electronic device 300 may control the first mobile electronic device 200 to perform corresponding operations. The second mobile electronic device 300 may display the image information collected by the first mobile electronic device 200, and the user may acquire the current view frame of the first mobile electronic device 200 by watching the image displayed on the display screen of the second mobile electronic device 300, and the user may make relevant adjustments according to the actual situation. For example, when the user needs to save the currently displayed image, the user can click a camera button on the second mobile electronic device 300, and the first mobile electronic device 200 may respond to the user's operation on the second mobile electronic device 300 and perform photography.

When the first mobile electronic device 200 is a gimbal with a camera, the controller 11 and the second mobile electronic device 300 may also control the gimbal. For example, the controller 11 and the second mobile electronic device 300 may control a pitch axis, a roll axis, a yaw axis, or other relevant components of the gimbal to perform related operations to adjust the first mobile electronic device 200 to collect images in different directions.

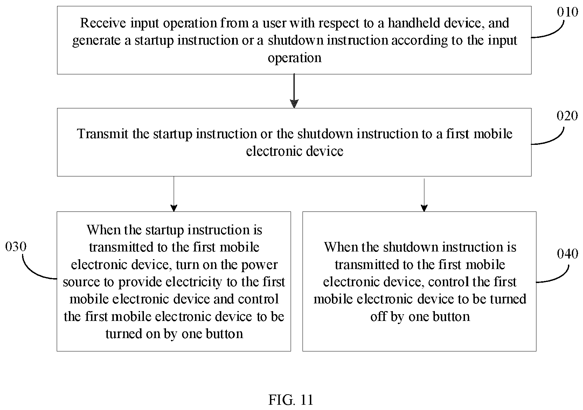

The present disclosure also provides a control method. The control method may be applied to a handheld device 100 (or a photographing device 400) provided by various embodiments of the present disclosure. As illustrated in FIG. 11, the control method includes:
010: receiving an input operation from a user with respect to the handheld device 100, and generating a startup instruction or a shutdown instruction according to the input operation;
020: transmitting the startup instruction or the shutdown instruction to a first mobile electronic device;
030: when the startup instruction is transmitted to the first mobile electronic device 200, turning on the power source 20 to provide electricity to the first mobile electronic device 200 and controlling the first mobile electronic device 200 to be turned on by one button; and
040: when the shutdown instruction is transmitted to the first mobile electronic device 200, controlling the first mobile electronic device 200 to be turned off by one button.

The present embodiment also provides a handheld device 100 and a photographing device 400. The handheld device 100 may be a handheld device 100 provided by various embodiments of the present disclosure, and the photographing device 400 may be a photographing device 400 provided by previous embodiments of the present disclosure. The control method may be applied to the handheld device 100 and the photographing device 400. A controller 11 of the handheld device 100 (or the photographing device 400) may be configured to execute processes 010, 020, 030, and 040. That is, the controller 11 may be configured to receive the input operation from the user with respect to the handheld device 100, generate the startup instruction or the shutdown instruction according to the input operation, and control the communication wires to transmit the startup instruction or the shutdown instruction to a first mobile electronic device 200. When the startup instruction is transmitted to the first mobile electronic device 200, the controller 11 may turn on the power source 20 to provide electricity to the first mobile electronic device 200 and control the first mobile electronic device 200 to be turned on by one button. When the shutdown instruction is transmitted to the first mobile electronic device 200, the controller 11 may control the first mobile electronic device 200 to be turned off by one button.

Correspondingly, after the first mobile electronic device 200 is mounted at the fixing bracket 50, the handheld device 100 may provide electrical energy to the first mobile electronic device 200 through the power source 20. It may be unnecessary for the user to carry a power bank and the user's burden may be alleviated. Further, the handheld device 100 may control the first mobile electronic device 200 to start up and/or shut down. It may be unnecessary for the user to remove the mobile electronic device to turn on and/or turn off the mobile electronic device. Convenience of the user's process, diversification of functions, and the user experience may be improved.

The input operation may be an operation of the user pressing a control button on the handheld device 100, or a touch operation of the user touching the touch screen on the handheld device 100. For example, by pressing the start button or the shutdown button on the controller 11, the controller 11 may generate a corresponding instruction (the startup instruction or the shutdown instruction) when receiving the user's operation of the control button, and transmit the instruction to the first mobile electronic device mounted at the handheld device 100 through the electrical connection mechanism 60. When the instruction is the startup instruction, the controller 11 may turn on the power supply 20 and supply power to the first mobile electronic device 200, and control the first mobile electronic device 200 to turn on with one key (that is, the first mobile electronic device 200 is in the off (or shutdown) state before receiving the instruction, when receiving the startup instruction of the controller 11, the first mobile electronic device 200 may respond to the startup instruction and start up (or turn on)). When the instruction is the shutdown instruction, the controller 11 may control the first mobile electronic device 200 to turn off with one key (that is, the first mobile electronic device 200 is in the on state before receiving the shutdown instruction, and when the shutdown instruction of the controller 11 is received, the first mobile electronic device 200 may respond to the shutdown instruction and turn off (or shut down)).

It can be understood that after the controller 11 generates the shutdown instruction, the controller 11 may shut down the first mobile electronic device 200 and disconnect the first mobile electronic device 200 from the power source 20, such that the power source 20 does not supply power to the first mobile electronic device (at this time, the battery of the first mobile electronic device 200 supplies power). In some other embodiments, the controller 11 may only turn off the first mobile electronic device 200 without disconnecting the power source 20.

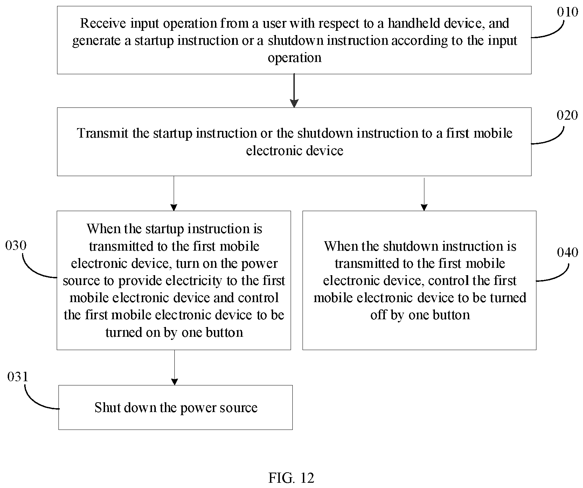

As illustrated in FIG. 12, in some embodiments, process 010 includes:
011: receiving the button-control operation of the user with respect to the controller 11.

In some embodiments, the controller 11 may be further configured to execute process 011, that is, the controller 11 may be further configured to receive the button-control operation of the user with respect to the controller 11.

Specifically, control buttons with different functions may be provided on the controller 11. For example, the control buttons may include control buttons with functions including: expanding the telescopic rod 40, retracting the telescopic rod 40, controlling the first mobile electronic device 200 to start (or turn on) or turn off (or shut down), providing power to or stopping providing power to the first mobile electronic device 200, controlling the first mobile electronic device 200 to enter a camera mode, controlling the first mobile electronic device 200 to photograph forward or backward, controlling the first mobile electronic device 200 to focus, controlling the first mobile electronic device 200 to zoom in, controlling the first mobile electronic device 200 to reduce a screen, controlling the first mobile electronic device 200 to enter a video mode, controlling the first mobile electronic device 200 to take photos or videos, controlling the first mobile electronic device 200 to stop or pause photographing, or controlling the first mobile electronic device 200 to switch filters, and so on. When the user selects a corresponding control button according to actual needs, the controller 11 may receive the button-control operation of the user and perform corresponding operations.

For example, the expanding length of the telescopic rod 40 in FIG. 3 may be too short. When the user selects a control button corresponding to "extending the telescopic rod 40" on the controller 11, the controller 11 may respond to the user's operation to control the telescopic rod 40 to expand, as illustrated in FIG. 4. In one embodiment, the user may operate a control button corresponding to "controlling the first mobile electronic device 200 to start or turn off' and correspondingly the controller 11 may execute process 020.

In some embodiments, as illustrated in FIG. 12, after process 030, the control method further includes:
031: shut down the power source 20.

In some embodiments, after turning on the power source 20 to supply power to the first mobile electronic device 200 and controlling the first mobile electronic device 200 to start up with one button, the controller 11 may be further configured to execute process 031, that is, to shut down the power source 20.

Specifically, in a process for the handheld device 100 to charge the first mobile electronic device 200, when the controller 11 detects that the power of the first mobile electronic device 200 is in a saturated state, the controller 11 may automatically shut down the power supply 20 to stop charging the first mobile electronic device 200 continuously.

Of course, in other embodiments, the controller 11 may also personalize the threshold of the charging capacity of the first mobile electronic device 200. For example, the user may configure that when the controller 11 detects that the remaining power of the first mobile electronic device 200 is less than 30%, the controller 11 controls the power supply 20 to supply power to the first mobile electronic device 200; when the controller 11 detects the power of the first mobile electronic device 200 reaches 60%, the controller 11 disconnects the circuit between the power source 20 and the first mobile electronic device 200. Correspondingly, when the power of both the handheld device 100 and the first mobile electronic device 200 is insufficient, the user can adjust the threshold of the charging amount according to the actual situations. A circumstance that the handheld device 100 consumes the power too quickly because of charging the first mobile electronic device 200 Circumstances and has insufficient power to work may be avoided.

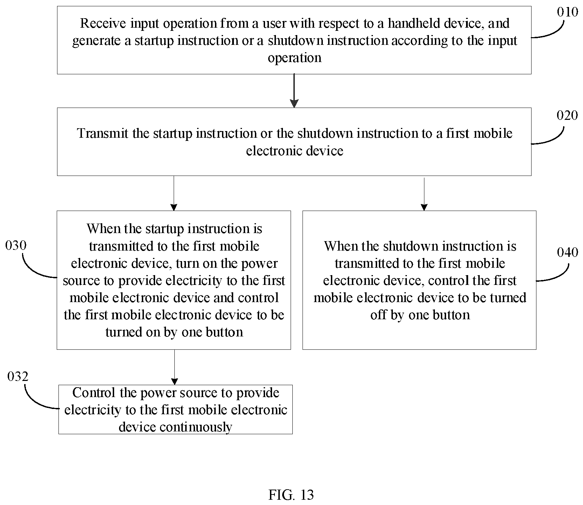

In some embodiments, as illustrated in FIG. 13, after process 030, the control method further includes:
032: controlling the power source 20 to provide power to the first mobile electronic device 200 continuously.

In some embodiments, after turning on the power source 20 to supply power to the first mobile electronic device 200 and controlling the first mobile electronic device 200 to start up with one button, the controller 11 may be further configured to execute process 032, that is, to control the power source 20 to provide power to the first mobile electronic device 200 continuously.

Specifically, when the handheld device 100 is charging the first mobile electronic device 200, the controller 11 may control the power supply 20 to continuously provide power to the first mobile electronic device 200 until the power of the first mobile electronic device 200 is saturated or until the remaining power of the power source 20 of the handheld device 100 reaches a low power alarm state or the remaining power is zero.

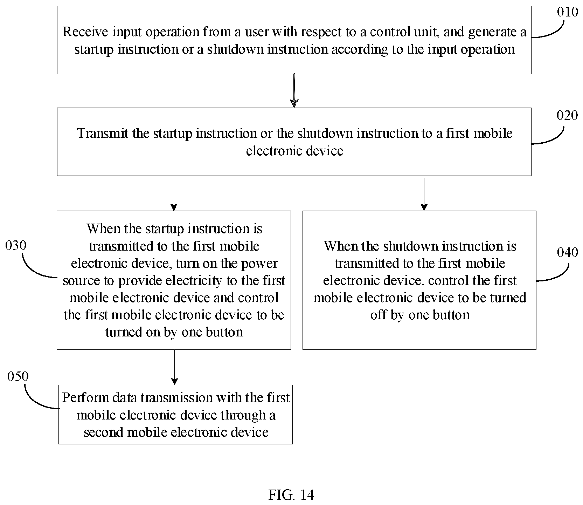

As illustrated in FIG. 14, in some embodiments, the control method further includes:
050: performing data transmission with the first mobile electronic device 200 through the second mobile electronic device 300.

In some embodiments, the communication device 80 may be configured to execute process 050, that is, the communication device 80 may be configured to perform data transmission with the first mobile electronic device 200 through the second mobile electronic device 300.

Specifically, the communication device 80 may enable communication between the first mobile electronic device 200 and the second mobile electronic device 300, and the controller 11 may be communicatively connected with the first mobile electronic device 200, such that the controller 11 can communicate with the second mobile electronic device 300 through the first mobile electronic device 200. The first mobile electronic device 200 may be a camera or a gimbal equipped with a camera, and the second mobile electronic device 300 may be a mobile phone or a tablet computer. The image information collected by the first mobile electronic device 200 may be transmitted to the second mobile electronic device 300. The control instruction on the second mobile electronic device 300 may also be transmitted to the first mobile electronic device 200 and cause the first mobile electronic device 200 to perform corresponding operations.

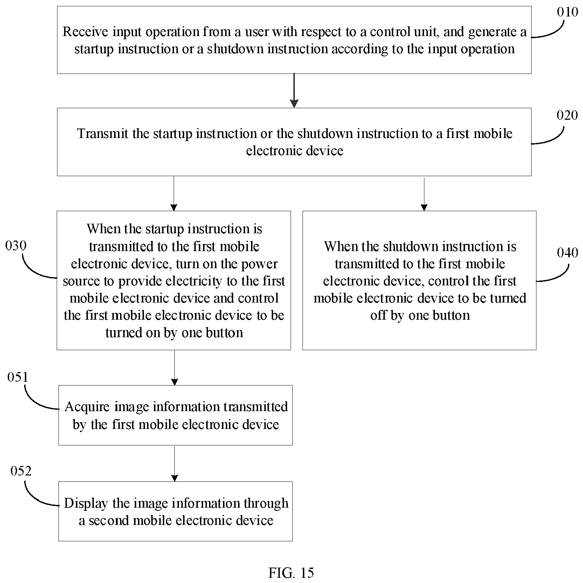

As illustrated in FIG. 15, in some embodiments, process 050 includes:
051: acquiring the image information transmitted by the first mobile electronic device 200; and
052: displaying the image information through the second mobile electronic device 300.

In some embodiments, the communication device 80 may be further configured to execute process 051 and process 052, that is, the communication device 80 may be configured to acquire the image information transmitted by the first mobile electronic device 200 and display the image information through the second mobile electronic device 300.

Specifically, the communication device 80 may be configured to display the image information collected by the first mobile electronic device 200 through the second mobile electronic device 300. Correspondingly, the user may watch the image displayed on the display screen of the second mobile electronic device 300 to acquire the current situation of the viewfinder of the first mobile electronic device 200. The user may also make relevant adjustments according to the actual situation. For example, when the user needs to save the currently displayed image screen, the user can click the camera button on the second mobile electronic device 300, and the first mobile electronic device 200 can respond to the user's operation on the second mobile electronic device 300 and take pictures.

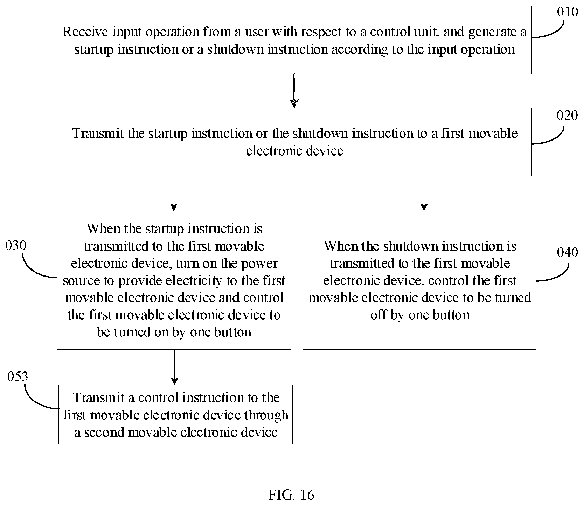

As illustrated in FIG. 16, in some embodiments, process 050 further includes:
053: transmitting the control instruction to the first mobile electronic device 200 through the second mobile electronic device 300, such that the first mobile electronic device 200 perform corresponding operations according to the control instruction.

In some embodiments, the communication device 80 may be further configured to execute process 053, that is, the communication device 80 may be configured to transmit the control instruction to the first mobile electronic device 200 through the second mobile electronic device 300, such that the first mobile electronic device 200 perform corresponding operations according to the control instruction.

Specifically, the control instructions on the second mobile electronic device 300 may also be transmitted to the first mobile electronic device 200 and may cause the first mobile electronic device 200 to perform corresponding operations. For example, the control instruction may include: controlling the first mobile electronic device 200 to enter the camera mode, controlling the first mobile electronic device 200 to photograph forward or backward, controlling the first mobile electronic device 200 to focus, controlling the first mobile electronic device 200 to zoom in, controlling the first mobile electronic device 200 to zoom out, controlling the first mobile electronic device 200 to start photographing, controlling the first mobile electronic device 200 to switch filters, controlling the first mobile electronic device 200 to enter the video mode, etc. When the user selects the corresponding control button according to actual needs, the communication device 80 may transmit the control instruction to the first mobile electronic device 200, such that the first mobile electronic device 200 performs corresponding operations through the control instruction.

In some embodiments, the control instruction further includes at least one of the following: instructing the first mobile electronic device 200 to photograph, instructing the first mobile electronic device 200 to change the photographing direction and/or angle, instructing the first mobile electronic device to change the photographing mode, or instructing the first mobile electronic device 200 to playback the video data. Correspondingly, the abundance of control instructions may be beneficial to increase the user's operability of the handheld device 100, make the matching application of the first mobile electronic device 200 and the second mobile electronic device 300 more convenient.

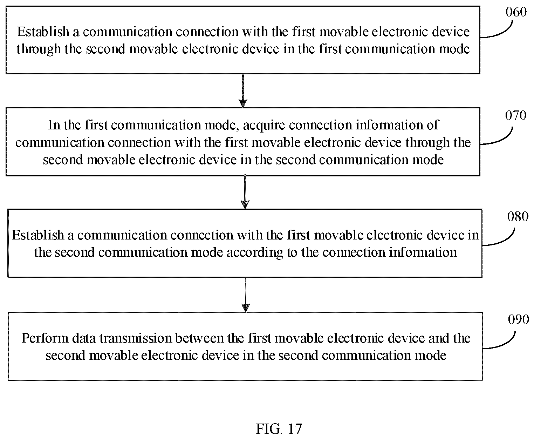

As illustrated in FIG. 17, in some embodiments, the control method further includes:
060: establishing a communication connection with the first mobile electronic device 200 through the second mobile electronic device 300 in the first communication mode;
070: in the first communication mode, acquiring connection information of communication connection with the first mobile electronic device 200 through the second mobile electronic device 300 in the second communication mode;
080: establishing a communication connection with the first mobile electronic device 200 in the second communication mode according to the connection information; and
090: performing data transmission between the first mobile electronic device 200 and the second mobile electronic device 300 in the second communication mode.

In some embodiments, the communication device 80 may be further configured to execute processes 060, 070, 080, and 090. That is, the communication device 80 may be configured to: establish the communication connection with the first mobile electronic device 200 through the second mobile electronic device 300 in the first communication mode; in the first communication mode, acquire the connection information of communication connection with the first mobile electronic device 200 through the second mobile electronic device 300 in the second communication mode; establish the communication connection with the first mobile electronic device 200 in the second communication mode according to the connection information; and perform the data transmission between the first mobile electronic device 200 and the second mobile electronic device 300 in the second communication mode.

Specifically, the first communication mode and the second communication mode may both be wireless communication modes. For example, the first communication mode may be the Bluetooth mode, and the second communication mode may be the wifi mode. The communication device 80 may quickly realize the communication connection between the first mobile electronic device 200 and the second mobile electronic device 300 through the first communication mode. After the first mobile electronic device 200 establishes the communication connection with the second mobile electronic device 300 in the first communication mode, by acquiring the connection information of the second communication mode between the first mobile electronic device 200 and the second mobile electronic device 300, the connection between the first mobile electronic device 200 and the second mobile electronic device 300 can automatically switch to the second communication mode and the data transmission may be performed through the second communication mode. Of course, in other embodiments, after the communication connection is established between the first mobile electronic device 200 and the second mobile electronic device 300 in the first communication mode, the data transmission may be performed in the first communication mode and the second communication mode simultaneously between the first mobile electronic device 200 and the second mobile electronic device 300.

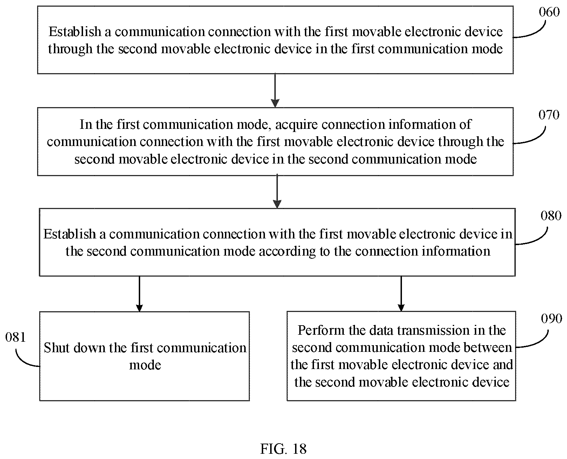

As illustrated in FIG. 18, in some embodiments, after process 080, the control method further includes:
081: shutting down the first communication mode.

In some embodiments, after the communication connection between the first mobile electronic device 200 and the second mobile electronic device 300 is established in the second communication mode, the communication device 80 may be configured to execute process 081, that is, to shut down the first communication mode.

Specifically, after the communication connection between the first mobile electronic device 200 and the second mobile electronic device 300 is established in the second communication mode, the communication device 80 may be configured to shut down the communication connection between the first mobile electronic device 200 and the second mobile electronic device in the first communication mode. Correspondingly, a single communication mode may be beneficial to save power of the two mobile electronic devices.

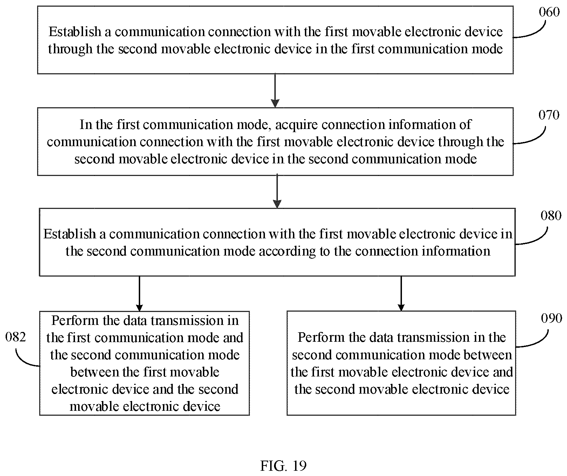

As illustrated in FIG. 19, in some embodiments, after process 080, the control method further includes:
082: performing the data transmission in the first communication mode and the second communication mode between the first mobile electronic device 200 and the second mobile electronic device 300.

In some embodiments, after the communication connection between the first mobile electronic device 200 and the second mobile electronic device 300 is established in the second communication mode, the communication device 80 may be configured to execute process 082. That is, the communication device 80 may be configured to perform the data transmission in the first communication mode and the second communication mode between the first mobile electronic device 200 and the second mobile electronic device 300.

Specifically, after the communication connection between the first mobile electronic device 200 and the second mobile electronic device 300 is established in the second communication mode, the communication device 80 may be configured to perform the data transmission in the first communication mode and the second communication mode between the first mobile electronic device 200 and the second mobile electronic device 300. Correspondingly, the dual communication modes may be beneficial to improve the data amount transmitted in a unit time between the two mobile electronic devices.

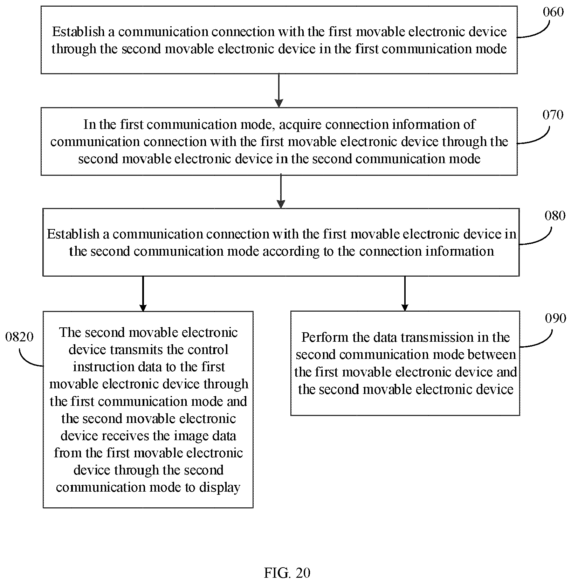

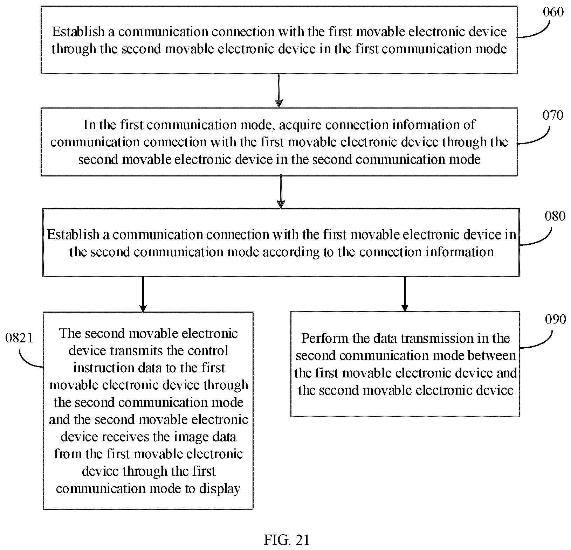

As illustrated in FIG. 20 and FIG. 21, in some embodiments, the data includes control instruction data and image data. Process 082 includes:
0820: the second mobile electronic device 300 transmits the control instruction data to the first mobile electronic device 200 through the first communication mode and the second mobile electronic device 300 receives the image data from the first mobile electronic device 200 through the second communication mode to display; or
0821: the second mobile electronic device 300 transmits the control instruction data to the first mobile electronic device 200 through the second communication mode and the second mobile electronic device 300 receives the image data from the first mobile electronic device 200 through the first communication mode to display.

In some embodiments, the data may include the control instruction data and the image data. The communication device 80 may be configured to execute process 0820 and process 0821. That is, the communication device 80 may be configured to: enable the second mobile electronic device 300 to transmit the control instruction data to the first mobile electronic device 200 through the first communication mode and enable the second mobile electronic device 300 to receive the image data from the first mobile electronic device 200 through the second communication mode to display; or enable the second mobile electronic device 300 to transmit the control instruction data to the first mobile electronic device 200 through the second communication mode and enable the second mobile electronic device 300 to receive the image data from the first mobile electronic device 200 through the first communication mode to display.

Correspondingly, a channel of the control instruction data transmitted from second mobile electronic device 300 to the first mobile electronic device 200 and a channel of the image data transmitted to the second mobile electronic device 300 from the first mobile electronic device 200 may not block each other. Hysteresis caused by the data transmission between the two mobile electronic devices may be reduced, which is more beneficial to improve the efficiency of the data transmission between the two mobile electronic devices.

Of course, in other embodiments, when the first mobile electronic device 200 and the second mobile electronic device 300 are performing data transmission, the communication device 80 may determine the current communication status of the two communication modes by itself, such that the communication device 80 may be able to use a communication mode with better quality for data transmission between two mobile electronic devices.

In this disclosure, descriptions with reference to the terms "one embodiment," "some embodiments," "exemplary embodiments," "examples," "specific examples," or "some examples" etc., mean that the specific features, structures, materials, or characteristics described in the embodiments or examples are included in at least one embodiment or example of the present disclosure. In this disclosure, the schematic representations of the above terms do not necessarily refer to the same embodiment or example. Moreover, the described specific features, structures, materials, or characteristics may be combined in any one or more embodiments or examples in an appropriate manner.

In addition, the terms "first" and "second" are only used for descriptive purposes, and cannot be understood as indicating or implying relative importance or implicitly indicating the number of indicated technical features. Therefore, the features defined with "first" and "second" may explicitly or implicitly include at least one of the features. In the description of the present disclosure, "a plurality of' means at least two, such as two, three, etc., unless specifically defined otherwise. Although the embodiments of the present disclosure have been shown and described above, it can be understood that the above embodiments are exemplary and should not be construed as limitations on the present disclosure. Those of ordinary skill in the art can comment on the foregoing within the scope of the present disclosure. The implementation manners undergo changes, modifications, substitutions and modifications, and the scope of this disclosure is defined by the claims and their equivalents.

## Claims

1. A handheld device applied to a first mobile electronic device, comprising a fixing bracket, a telescopic rod, a handheld member, and a power source, wherein:
the fixing bracket is mounted at the telescopic rod;
the telescopic rod is mounted at the handheld member;
the power source is disposed at the handheld member;
the fixing bracket is configured to detachably connect the first mobile electronic device;
after the fixing bracket detachably connects the first mobile electronic device, the handheld device is configured to provide electrical energy to the first mobile electronic device through the power source, and to control the first mobile electronic device to start up and/or shut down.

2. The handheld device according to claim 1, wherein the fixing bracket is disposed at an end of the telescopic rod away from the handheld member, the fixing bracket is detachably mounted at the telescopic rod.

3. The handheld device according to claim 2, wherein:
after the fixing bracket is mounted at the telescopic rod, the fixing bracket is capable of rotating with respect to the telescopic rod.

4. The handheld device according to claim 3, wherein:
the fixing bracket is provided with two lugs opposite to each other;
after the fixing bracket is mounted at the telescopic rod, an end of the telescopic rod is located between the two lugs, and the telescopic rod is connected to the two lugs through a damping shaft.

5. The handheld device according to claim 1, wherein:
the fixing bracket includes a first buckle member and a second buckle member;
the first buckle member and the second buckle member are capable of being in a first state, in the first state, the first buckle member and the second buckle member are fixed with respect to each other and form an opening, at least a portion of the first mobile electronic device is capable of being accommodated in the opening;
the first buckle member and the second buckle member are capable of being in a second state, in the second state, the first buckle member and the second buckle member rotate relative to each other, the first mobile electronic device is capable of being removed from the fixing bracket.

6. The handheld device according to claim 5, wherein:
the first buckle member and the second buckle member are rotatably connected with each other;
the second buckle member is rotatably mounted at an end of the telescopic rod away from the handheld member.

7. The handheld device according to claim 5, wherein the opening has a closed ring shape, at least one of the first buckle member or the second buckle member is provided with a mechanism for locking the first mobile electronic device.

8. The handheld device according to claim 7, wherein:
the first buckle member includes a first half-enclosing frame;
the second buckle member includes a second half-enclosing frame which is complementary to the first half-enclosing frame;
the first half-enclosing frame and the second half-enclosing frame are capable of buckling together to form the opening.

9. The handheld device according to claim 8, wherein:
at least one of the first half-enclosing frame or the second half-enclosing frame is provided with a positioning groove;
the positioning groove is configured to cooperate with a retractable positioning block of the first mobile electronic device to lock the first mobile electronic device in the opening.

10. The handheld device according to claim 9, wherein the second half-enclosing frame is rotatably mounted at an end of the telescopic rod away from the handheld member, the positioning groove is disposed at the second half-enclosing frame.

11. The handheld device according to claim 8 or claim 9, wherein at least one of the first half-enclosing frame or the second half-enclosing frame is provided with a protrusion, the protrusion is configured to cooperate slidably with a sliding groove on the first mobile electronic device.

12. The handheld device according to claim 11, wherein the second half-enclosing frame is rotatably mounted at an end of the telescopic rod away from the handheld member and is provided with a block, the protrusion is disposed at the block.

13. The handheld device according to claim 12, wherein:
the block includes a surface and a side face surrounding the surface; and
the protrusion is disposed at the side face of the block.

14. The handheld device according to claim 13, wherein when the second half-enclosing frame is provided with the positioning groove, the positioning groove is disposed at the surface of the block.

15. The handheld device according to claim 5, wherein a centerline of the opening is capable of rotating to a horizontal position or a vertical position.

16. The handheld device according to claim 5, wherein:
the first buckle member and the second buckle member are fixed relative to each other through a buckle structure;
the buckle structure is disposed at the first buckle member;
the buckle structure includes a first buckle element rotatably disposed at the first buckle member and a second buckle element rotatably disposed at the first buckle element;
in the second state, the first buckle element is configured to rotate in a first rotation direction and drive the second buckle element to press the second buckle member to contact the first buckle member, the first buckle element is configured to rotate in a second rotation direction and drive the second buckle element to tighten the first buckle member and the second buckle member, such that the first buckle member and the second buckle member are in the first state; and/or
in the first state, the first buckle element is configured to rotate in the first rotation direction and drive the second buckle element to unlock the second buckle member, such that the first buckle member and the second buckle member are in the second state.

17. The handheld device according to claim 6, wherein:
the second buckle member is rotatably mounted at the end of the telescopic rod away from the handheld member;
the second buckle member is provided with a coupling groove;
the coupling groove is configured to mount reserved components.

18. The handheld device according to claim 1, wherein:
the handheld member is provided with a controller;
the fixing bracket is provided with an electrical connection mechanism;
the controller is electrically connected to the electrical connection mechanism and the power source;
after the first mobile electronic device is connected to the fixing bracket, the controller is electrically connected to the first mobile electronic device through the electrical connection mechanism, to selectively provide or stop providing electrical energy to the first mobile electronic device; and/or, the controller is electrically connected to the first mobile electronic device through the electrical connection mechanism, to selectively turn on or turn off the first mobile electronic device.

19. The handheld device according to claim 18, wherein the electrical connection mechanism includes:
a contact point disposed at the fixing bracket, for electrically connecting the first mobile electronic device; and
a communication wire passing through the telescopic rod, wherein an end of the communication wire is electrically connected to the contact point, another end of the communication wire is electrically connected to the controller.

20. The handheld device according to claim 1, further comprising a clip assembly mounted at the handheld member, wherein the clip assembly is configured to hold a second mobile electronic device that has information interaction with the first mobile electronic device.

21. The handheld device according to claim 20, wherein:
the clip assembly includes a clamping space;
the clip assembly is configured to adjust a size of the clamping space to selectively connect or detach the second mobile electronic device.

22. The handheld device according to claim 21, wherein:
the clip assembly includes a first clamp member and a second clamp member;
the first clamp member and the second clamp member cooperatively enclose to form the clamping space;
the first clamp member and the second clamp member is capable of moving away from each other to increase the size of the clamping space; and/or
the first clamp member and the second clamp member are capable of moving toward each other to decrease the size of the clamping space.

23. The handheld device according to claim 21, wherein:
the clip assembly includes a first clamp member and a second clamp member connected to each other;
the first clamp member is disposed at the handheld member;
the second clamp member is disposed at the first clamp member;
the first clamp member and the second clamp member cooperatively enclose to form the clamping space;
the second clamp member is capable of moving away from the first clamp member under an external force, to increase the size of the clamping space;
the second clamp member is capable of moving toward the first clamp member when the external force is released to decrease the size of the clamping space.

24. The handheld device according to claim 22 or claim 23, wherein:
the clip assembly further includes a stabilization member;
the stabilization member is disposed at a surface of the first clamp member and a surface of the second clamp member, to increase friction between the second mobile electronic device and the clip assembly to prevent the second mobile electronic device from leaving the clip assembly.

25. The handheld device according to claim 24, wherein:
the first clamp member includes a first main body and a first clamp arm;
the second clamp member includes a second main body and a second clamp arm;
the stabilization member includes:
a plurality of soft pads, the plurality of soft pads are disposed at a surface of the first clamp arm facing the second mobile electronic device and a surface of the second clamp arm facing the second mobile electronic device, respectively, to increase friction between the second mobile electronic device and the clip assembly; and
a plurality of blocks, the plurality of blocks are disposed at an end of the first clamp arm away from the first main body and at an end of the second clamp arm away from the second main body, respectively, the plurality of blocks are configured to prevent the second mobile electronic device from leaving the clip assembly along an extending direction of the first clamp arm and an extending direction of the second clamp arm.

26. The handheld device according to claim 20, wherein the clip assembly is detachably mounted at the handheld member.

27. The handheld device according to claim 20, wherein:
the clip assembly is rotatably mounted at the handheld member;
when the clip assembly rotates to a first position, the clip assembly is in an expanded state;
when the clip assembly rotates to a second position, the clip assembly is in a retracted state.

28. The handheld device according to claim 27, wherein:
the handheld member is provided with a controller;
the clip assembly is reversibly mounted at the handheld member;
when the clip assembly is turned over to the second position, the clip assembly is capable of turning over to a position covering the controller.

29. The handheld device according to claim 20, wherein:
the clip assembly is provided with a groove interface;
the groove interface is configured to accommodate an external interface of the first mobile electronic device;
the external interface is detachably mounted at the first mobile electronic device.

30. The handheld device according to claim 20, further comprising a communication device, wherein:
the communication device is used for a wireless communication connection between the first mobile electronic device and the second mobile electronic device.

31. The handheld device according to claim 30, wherein:
the communication device includes a first communication mode and a second communication mode;
after the first mobile electronic device is connected to the second mobile electronic device through the first communication mode, a communication mode between the first mobile electronic device and the second mobile electronic device is automatically switched to the second communication mode.

32. The handheld device according to claim 31, wherein the first communication mode is a Bluetooth mode and the second communication mode is a wifi mode.

33. The handheld device according to claim 30, wherein:
the communication device includes a base and a connection interface;
the base is provided with a mounting groove;
the connection interface is disposed at a bottom surface of the mounting groove;
the first mobile electronic device is detachably mounted in the mounting groove;
after the first mobile electronic device is mounted in the mounting groove, the communication device is electrically connected to the first mobile electronic device through the connection interface.

34. The handheld device according to claim 33, wherein:
the communication device further includes a clamp block mounted at a side of the mounting groove;
the clamp block is configured to limit the first mobile electronic device from leaving the mounting groove.

35. A photographing device, comprising a handheld device and a first mobile electronic device, wherein:
the handheld device includes a fixing bracket, a telescopic rod, a handheld member, and a power source;
the fixing bracket is mounted at the telescopic rod;
the telescopic rod is mounted at the handheld member;
the power source is disposed at the handheld member;
the first mobile electronic device is capable of being detachably connected with the fixing bracket; and
after the first mobile electronic device is connected with the fixing bracket, the handheld device is configured to provide electrical energy to the first mobile electronic device through the power source, and to control the first mobile electronic device to start up and/or shut down.

36. The photographing device according to claim 35, wherein the fixing bracket is disposed at an end of the telescopic rod away from the handheld member, the fixing bracket is detachably mounted at the telescopic rod.

37. The photographing device according to claim 36, wherein:
after the fixing bracket is mounted at the telescopic rod, the fixing bracket is capable of rotating with respect to the telescopic rod.

38. The photographing device according to claim 37, wherein:
the fixing bracket is provided with two lugs opposite to each other; and
after the fixing bracket is mounted at the telescopic rod, an end of the telescopic rod is located between the two lugs, and the telescopic rod is connected to the two lugs through a damping shaft.

39. The photographing device according to claim 35, wherein:
the fixing bracket includes a first buckle member and a second buckle member;
the first buckle member and the second buckle member are capable of being in a first state;
in the first state, the first buckle member and the second buckle member are fixed with respect to each other and form an opening, at least a portion of the first mobile electronic device is capable of being accommodated in the opening;
the first buckle member and the second buckle member are capable of being in a second state, in the second state, the first buckle member and the second buckle member are capable of rotating relative to each other, the first mobile electronic device is capable of being removed from the fixing bracket.

40. The photographing device according to claim 39, wherein:
the first buckle member and the second buckle member are rotatably connected with each other;
the second buckle member is rotatably mounted at an end of the telescopic rod away from the handheld member.

41. The photographing device according to claim 39, wherein the opening has a closed ring shape, at least one of the first buckle member or the second buckle member is provided with a mechanism for locking the first mobile electronic device.

42. The photographing device according to claim 41, wherein:
the first buckle member includes a first half-enclosing frame;
the second buckle member includes a second half-enclosing frame which is complementary to the first half-enclosing frame;
the first half-enclosing frame and the second half-enclosing frame are capable of buckling together to form the opening.

43. The photographing device according to claim 42, wherein:
at least one of the first half-enclosing frame or the second half-enclosing frame is provided with a positioning groove;
the positioning groove is configured to cooperate with a retractable positioning block of the first mobile electronic device to lock the first mobile electronic device in the opening.

44. The photographing device according to claim 43, wherein the second half-enclosing frame is rotatably mounted at the end of the telescopic rod away from the handheld member, the positioning groove is disposed at the second half-enclosing frame.

45. The photographing device according to claim 42 or claim 43, wherein at least one of the first half-enclosing frame or the second half-enclosing frame is provided with a protrusion, the protrusion is configured to cooperate slidably with a sliding groove on the first mobile electronic device.

46. The photographing device according to claim 45, wherein the second half-enclosing frame is rotatably mounted at an end of the telescopic rod away from the handheld member and is provided with a block, the protrusion is disposed at the block.

47. The photographing device according to claim 46, wherein:
the block includes a surface and a side face surrounding the surface; and
the protrusion is disposed at the side face of the block.

48. The photographing device according to claim 47, wherein when the second half-enclosing frame is provided with the positioning groove, the positioning groove is disposed at the surface of the block.

49. The photographing device according to claim 39, wherein a centerline of the opening is capable of rotating to a horizontal position or a vertical position.

50. The photographing device according to claim 39, wherein:
the first buckle member and the second buckle member are fixed relative to each other through a buckle structure;
the buckle structure is disposed at the first buckle member;
the buckle structure includes a first buckle element rotatably disposed at the first buckle member and a second buckle element rotatably disposed at the first buckle element;
in the second state, the first buckle element is configured to rotate in a first rotation direction and drive the second buckle element to press the second buckle member to contact the first buckle member, the first buckle element is configured to rotate in a second rotation direction and drive the second buckle element to tighten the first buckle member and the second buckle member such that the first buckle member and the second buckle member are in the first state; and/or
in the first state, the first buckle element is configured to rotate in the first rotation direction and drive the second buckle element to unlock the second buckle member, such that the first buckle member and the second buckle member are in the second state.

51. The photographing device according to claim 40, wherein:
the second buckle member is rotatably mounted at the end of the telescopic rod away from the handheld member;
the second buckle member is provided with a coupling groove;
the coupling groove is configured to mount reserved components.

52. The photographing device according to claim 35, wherein:
the handheld member is provided with a controller;
the fixing bracket is provided with an electrical connection mechanism;
the controller is electrically connected to the electrical connection mechanism and the power source;
after the first mobile electronic device is connected to the fixing bracket, the controller is electrically connected to the first mobile electronic device through the electrical connection mechanism, to selectively provide or stop providing electrical energy to the first mobile electronic device selectively; and/or, the controller is electrically connected to the first mobile electronic device through the electrical connection mechanism, to selectively turn on or turn off the first mobile electronic device selectively.

53. The photographing device according to claim 53, wherein the electrical connection mechanism includes:
a contact point disposed at the fixing bracket, for electrically connecting the first mobile electronic device; and
a communication wire passing through the telescopic rod, wherein an end of the communication wire is electrically connected to the contact point, another end of the communication wire is electrically connected to the controller.

54. The photographing device according to claim 35, further comprising a clip assembly mounted at the handheld member, wherein the clip assembly is configured to hold a second mobile electronic device that has information interaction with the first mobile electronic device.

55. The photographing device according to claim 54, wherein:
the clip assembly includes a clamping space;
the clip assembly is configured to adjust a size of the clamping space to selectively connect or detach the second mobile electronic device.

56. The photographing device according to claim 55, wherein:
the clip assembly includes a first clamp member and a second clamp member;
the first clamp member and the second clamp member cooperatively enclose to form the clamping space;
the first clamp member and the second clamp member is capable of moving away from each other to increase the size of the clamping space; and/or
the first clamp member and the second clamp member are capable of moving toward each other to decrease the size of the clamping space.

57. The photographing device according to claim 55, wherein:
the clip assembly includes a first clamp member and a second clamp member connected to each other;
the first clamp member is disposed at the handheld member;
the second clamp member is disposed at the first clamp member;
the first clamp member and the second clamp member cooperatively enclose to form the clamping space;
the second clamp member is capable of moving away from the first clamp member under an external force, to increase the size of the clamping space;
the second clamp member is capable of moving toward the first clamp member when the external force is released to decrease the size of the clamping space.

58. The photographing device according to claim 56 or claim 57, wherein:
the clip assembly further includes a stabilization member;
the stabilization member is disposed at a surface of the first clamp member and a surface of the second clamp member, to increase friction between the second mobile electronic device and the clip assembly to prevent the second mobile electronic device from leaving the clip assembly.

59. The photographing device according to claim 58, wherein:
the first clamp member includes a first main body and a first clamp arm;
the second clamp member includes a second main body and a second clamp arm;
the stabilization member includes
a plurality of soft pads, the plurality of soft pads are disposed at a surface of the first clamp arm facing the second mobile electronic device and a surface of the second clamp arm facing the second mobile electronic device, respectively, to increase friction between the second mobile electronic device and the clip assembly; and
a plurality of blocks, the plurality of blocks are disposed at an end of the first clamp arm away from the first main body and an end of the second clamp arm away from the second main body, respectively; the plurality of blocks are configured to prevent the second mobile electronic device from leaving the clip assembly along an extending direction of the first clamp arm and an extending direction of the second clamp arm.

60. The photographing device according to claim 54, wherein the clip assembly is detachably mounted at the handheld member.

61. The photographing device according to claim 54, wherein:
the clip assembly is rotatably mounted at the handheld member;
when the clip assembly rotates to a first position, the clip assembly is in an expanded state;
when the clip assembly rotates to a second position, the clip assembly is in a retracted state.

62. The photographing device according to claim 61, wherein:
the handheld member is provided with a controller;
the clip assembly is reversibly mounted at the handheld member; and
when the clip assembly is turned over to the second position, the clip assembly is capable of turning over to a position covering the controller.

63. The photographing device according to claim 54, wherein:
the clip assembly is provided with a groove interface;
the groove interface is configured to accommodate an external interface of the first mobile electronic device;
the external interface is detachably mounted at the first mobile electronic device.

64. The photographing device according to claim 54, further comprising a communication device, wherein:
the communication device is used for a wireless communication connection between the first mobile electronic device and the second mobile electronic device.

65. The photographing device according to claim 64, wherein:
the communication device includes a first communication mode and a second communication mode;
after the first mobile electronic device is connected to the second mobile electronic device through the first communication mode, a communication mode between the first mobile electronic device and the second mobile electronic device is automatically switched to the second communication mode.

66. The photographing device according to claim 65, wherein the first communication mode is a Bluetooth mode and the second communication mode is a wifi mode.

67. The photographing device according to claim 64, wherein:
the communication device includes a base and a connection interface;
the base is provided with a mounting groove;
the connection interface is disposed at a bottom surface of the mounting groove;
the first mobile electronic device is detachably mounted in the mounting groove; and
after the first mobile electronic device is mounted in the mounting groove, the communication device is electrically connected to the first mobile electronic device through the connection interface.

68. The photographing device according to claim 67, wherein:
the communication device further includes a clamp block mounted at a side of the mounting groove; and
the clamp block is configured to limit the first mobile electronic device from leaving the mounting groove.

69. A control method applied to a handheld device, wherein:
the handheld device includes a fixing bracket, a telescopic rod, a handheld member, and a power source;
the fixing bracket is mounted at the telescopic rod;
the telescopic rod is mounted at the handheld member;
the power source is disposed at the handheld member;
the fixing bracket is provided with an electrical connection mechanism for electrically connecting a first mobile electronic device, the first mobile electronic device is capable of being detachably connected with the fixing bracket;
the control method includes:
receiving an input operation from a user with respect to the handheld device;
generating a startup instruction or a shutdown instruction according to the input operation;
transmitting the startup instruction or the shutdown instruction to the first mobile electronic device;
when the startup instruction is transmitted to the first mobile electronic device, turning on the power source to provide electricity to the first mobile electronic device and controlling the first mobile electronic device to start up by one button; and
when the shutdown instruction is transmitted to the first mobile electronic device, controlling the first mobile electronic device to shut down by one button.

70. The control method according to claim 69, wherein:
the handheld member is provided with a controller; and
receiving the input operation from the user with respect to the handheld device includes receiving a button control operation from the user with respect to the controller.

71. The control method according to claim 70, wherein the electrical connection mechanism includes:
a contact point disposed at the fixing bracket, for electrically connecting the first mobile electronic device; and
a communication wire passing through the telescopic rod, wherein an end of the communication wire is electrically connected to the contact point, another end of the communication wire is electrically connected to the controller.

72. The control method according to claim 69, after turning on the power source to provide electricity to the first mobile electronic device and controlling the first mobile electronic device to start up by one button, further comprising:
shutting down the power source.

73. The control method according to claim 69, after turning on the power source to provide electricity to the first mobile electronic device and controlling the first mobile electronic device to start up by one button, further comprising:
controlling the power source to provide electricity to the first mobile electronic device continuously.

74. The control method according to claim 69, wherein:
the handheld device is provided with a second mobile electronic device; and
the control method further includes: performing data transmission with the first mobile electronic device through the second mobile electronic device.

75. The control method according to claim 74, wherein performing the data transmission with the first mobile electronic device through the second mobile electronic device includes:
acquiring image information transmitted by the first mobile electronic device; and
displaying the image information through the second mobile electronic device.

76. The control method according to claim 74, wherein performing the data transmission with the first mobile electronic device through the second mobile electronic device includes:
transmitting the control instruction to the first mobile electronic device through the second mobile electronic device, such that the first mobile electronic device performs corresponding operations according to the control instruction.

77. The control method according to claim 76, wherein the control instruction includes at least one of: instructing the first mobile electronic device to photograph, instructing the first mobile electronic device to change a photographing direction or angle, instructing the first mobile electronic device to change a photographing mode, or instructing the first mobile electronic device to playback video data.

78. The control method according to any one of claims 74 to 77, further comprising:
establishing a communication connection with the first mobile electronic device through the second mobile electronic device in a first communication mode;
in the first communication mode, acquiring connection information of the communication connection with the first mobile electronic device through the second mobile electronic device in a second communication mode;
establishing a communication connection with the first mobile electronic device in the second communication mode according to the connection information; and
performing data transmission between the first mobile electronic device and the second mobile electronic device in the second communication mode.

79. The control method according to claim 78, after the second mobile electronic device establishes the communication connection with the first mobile electronic device in the second communication mode, further comprising: shutting down the first communication mode.

80. The control method according to claim 78, after the second mobile electronic device establishes the communication connection with the first mobile electronic device in the second communication mode, further comprising: transmitting data in the first communication mode and the second communication mode between the first mobile electronic device and the second mobile electronic device.

81. The control method according to claim 80, wherein:
the data includes control instruction data and image data;
performing the data transmission in the first communication mode and the second communication mode between the first mobile electronic device and the second mobile electronic device includes:
the second mobile electronic device transmits the control instruction data to the first mobile electronic device through the first communication mode and receives the image data from the first mobile electronic device through the second communication mode to display; or
the second mobile electronic device transmits the control instruction data to the first mobile electronic device through the second communication mode and receives the image data from the first mobile electronic device through the first communication mode to display.

82. The control method according to claim 78, wherein the first communication mode is a Bluetooth mode and the second communication mode is a wifi mode.

83. The control method according to claim 74, wherein the second mobile electronic device is detachably mounted at the handheld member.

84. A handheld device, comprising a fixing bracket, a telescopic rod, a handheld member, and a power source, wherein:
the fixing bracket is mounted at the telescopic rod;
the telescopic rod is mounted at the handheld member;
the power source is disposed at the handheld member;
the fixing bracket is provided with an electrical connection mechanism for electrically connecting a first mobile electronic device, the first mobile electronic device is capable of being detachably connected with the fixing bracket;
the handheld member is provided with a controller;
the controller is configured to:
receive an input operation from a user with respect to the handheld device;
generate a startup instruction or a shutdown instruction according to the input operation;
transmit the startup instruction or the shutdown instruction to the first mobile electronic device;
when the startup instruction is transmitted to the first mobile electronic device, turn on the power source to provide electricity to the first mobile electronic device and control the first mobile electronic device to start up by one button; and
when the shutdown instruction is transmitted to the first mobile electronic device, control the first mobile electronic device to shut down by one button.

85. The handheld device according to claim 84, wherein the controller is further configured to receive a button control operation from the user with respect to the controller.

86. The handheld device according to claim 85, wherein the electrical connection mechanism includes
a contact point disposed at the fixing bracket, for electrically connecting the first mobile electronic device; and
a communication wire passing through the telescopic rod, wherein an end of the communication wire is electrically connected to the contact point, another end of the communication wire is electrically connected to the controller.

87. The handheld device according to claim 84, after turning on the power source to provide electricity to the first mobile electronic device and controlling the first mobile electronic device to start up by one button, the controller is further configured to shut down the power source.

88. The handheld device according to claim 84, after turning on the power source to provide electricity to the first mobile electronic device and controlling the first mobile electronic device to start up by one button, the controller is further configured to:
control the power source to provide electricity to the first mobile electronic device continuously.

89. The handheld device according to claim 84, wherein the handheld device is mounted with a second mobile electronic device;
the handheld device further includes a communication device, the communication device is used for a wireless connection between the first mobile electronic device and the second mobile electronic device;
the communication device is configured to perform data transmission with the first mobile electronic device through the second mobile electronic device.

90. The handheld device according to claim 89, wherein the communication device is further configured to:
acquire image information transmitted by the first mobile electronic device; and
display the image information through the second mobile electronic device.

91. The handheld device according to claim 89, wherein the communication device is further configured to:
transmit a control instruction to the first mobile electronic device through the second mobile electronic device, such that the first mobile electronic device performs corresponding operations according to the control instruction.

92. The handheld device according to claim 91, wherein the control instruction includes at least one of: instructing the first mobile electronic device to photograph, instructing the first mobile electronic device to change a photographing direction and/or angle, instructing the first mobile electronic device to change a photographing mode, or instructing the first mobile electronic device to playback video data.

93. The handheld device according to any one of claims 89 to 92, wherein the communication device is further configured to:
establish a communication connection with the first mobile electronic device through the second mobile electronic device in a first communication mode;
in the first communication mode, acquire connection information of communication connection with the first mobile electronic device through the second mobile electronic device in a second communication mode;
establish a communication connection with the first mobile electronic device in the second communication mode according to the connection information; and
perform data transmission between the first mobile electronic device and the second mobile electronic device in the second communication mode.

94. The handheld device according to claim 93, wherein after the second mobile electronic device establishes the communication connection with the first mobile electronic device in the second communication mode, the communication device is further configured to shut down the first communication mode.

95. The handheld device according to claim 93, wherein after the second mobile electronic device establishes the communication connection with the first mobile electronic device in the second communication mode, the communication device is further configured to: transmitting data in the first communication mode and the second communication mode between the first mobile electronic device and the second mobile electronic device.

96. The handheld device according to claim 95, wherein:
the data includes control instruction data and image data;
the communication device is further configured such that:
the second mobile electronic device transmits the control instruction data to the first mobile electronic device through the first communication mode and the second mobile electronic device receives the image data from the first mobile electronic device through the second communication mode to display; or
the second mobile electronic device transmits the control instruction data to the first mobile electronic device through the second communication mode and the second mobile electronic device receives the image data from the first mobile electronic device through the first communication mode to display.

97. The handheld device according to claim 93, wherein the first communication mode is a Bluetooth mode and the second communication mode is a wifi mode.

98. The handheld device according to claim 89, wherein the second mobile electronic device is detachably mounted at the handheld member.

99. A photographing device, comprising:
the handheld device according to any one of claims 84 to 98; and
a first mobile electronic device detachably mounted at the handheld device.
